# FASCICULE DE BREVET EUROPEEN

(11) **EP 3 170 408 B1**
(45) Date de publication et mention de la délivrance du brevet: **30.12.2020**
(21) Numéro de dépôt: 16200109.3
(22) Date de dépôt: 22.11.2016
(51) Int. Cl.: A23L 7/10, A23L 29/30, A23L 33/125

(54) **PROCEDE DE PREPARATION DE SIROPS DE GLUCOSE A FAIBLE TAUX DE GLUTEN**
HERSTELLUNGSVERFAHREN VON GLUKOSESIRUP MIT GERINGEM GLUTENGEHALT
METHOD FOR PREPARING GLUCOSE SYRUPS WITH LOW LEVELS OF GLUTEN

(30) Priorité: 23.11.2015 FR 1561274
(43) Date de publication de la demande: 24.05.2017
(73) Titulaire: Chamtor S.A., 51110 Bazancourt (FR); MCN Biotech S.A.S., 77700 Serris (FR)
(72) Inventeur: VALETTE, Jan, 51100 REIMS (FR); de CHERISEY, Imanol, 08300 RETHEL (FR); NEDJMA, Mustapha, 77700 SERRIS (FR)
(74) Mandataire: Grosset-Fournier, Chantal Catherine

(56) Documents cités:
- CN-A- 101 049 133
- DE-A1- 4 125 968
- JP-A- 2005 323 556
- Anonymous: "Glucose syrup derived from wheat Background", , 1 août 2016 (2016-08-01), XP055354709, Extrait de l'Internet: URL:http://www.coeliac.org.au/uploads/6570 1/ufiles/Fact_sheets/Glucose_syrup_fact_sh eet.pdf [extrait le 2017-03-14]
- DOSTALEK P ET AL: "Determination of gluten in glucose syrups", JOURNAL OF FOOD COMPOSITION AND ANALYSIS, ELSEVIER, AMSTERDAM, NL, vol. 22, no. 7-8, 1 novembre 2009 (2009-11-01), pages 762-765, XP026764470, ISSN: 0889-1575, DOI: 10.1016/J.JFCA.2009.01.018 [extrait le 2009-03-18]
- Larry Hobbs: "Starch: Chemistry and Technology, Third Edition Sweeteners from Starch: Production, Properties and Uses", , 1 janvier 2009 (2009-01-01), XP055281283, Extrait de l'Internet: URL:http://nfscfaculty.tamu.edu/talcott/co urses/FSTC605/Papers Reviewed/Sweetners from starch.pdf [extrait le 2016-06-16]

## Description

La présente invention a pour objet un procédé de préparation de sirops de glucose à faible taux de gluten

L'invention est définie par le jeu de revendications jointes.

La maladie cœliaque est caractérisée par une atrophie des villosités intestinales. Ceci induit un syndrome de malabsorption (diarrhée, amaigrissement, carences diverses).

Sa prévalence est d'environ 1% en Europe et aux Etats-Unis, le nombre de cas de maladie cœliaque étant en augmentation.

La maladie cœliaque est apparentée aux maladies auto-immunes mais strictement dépendante d'une exposition au gluten. Le gluten déclenche une réponse immune intestinale chez les sujets prédisposés.

Le seul traitement de la maladie cœliaque consiste à suivre un régime strict excluant toute source de gluten dans l'alimentation, ce régime sans gluten étant préconisé à vie.

Le *Codex Alimentarius* (Codex STAN 118-1979, révisé en 2008) stipule que les aliments labellisés « gluten-free » ne doivent pas dépasser un taux de 20 mg/kg de produit fini en gluten. La méthode employée pour déterminer la teneur en gluten recommandée par le *Codex Alimentarius* est l'essai d'immunoabsorption enzymatique (ELISA) avec l'anticorps R5 (Mendez). D'autres méthodes ELISA ont également été développées mettant en œuvre l'anticorps G12.

Le sirop de glucose est un ingrédient très utilisé par l'industrie agroalimentaire. Il peut être obtenu par une hydrolyse enzymatique de l'amidon de céréales, en particulier l'amidon de blé, d'orge, de seigle ou d'épeautre.

Actuellement, le sirop de glucose est principalement obtenu par liquéfaction et saccharification de l'amidon, filtration, décoloration sur charbons actifs, déminéralisation sur résines échangeuses d'ions et enfin concentration par évaporation.

Ces étapes de purification, non destinées à l'origine à faire baisser le taux de gluten, permettent d'obtenir des sirops dont le taux de gluten est réduit, parfois à moins de 20 ppm, mais le résultat est dépendant du taux de gluten initial dans la matière première.

En conséquence, les différentes étapes de purification du sirop de glucose permettent de retirer une certaine quantité de gluten du sirop de glucose mais sans garantir constamment un seuil inférieur à 20 ppm.

Ainsi, un but de la présente invention est de fournir des sirops de glucose ayant un taux de gluten inférieur à 20 ppm.

Un autre but de la présente invention est de fournir des sirops de glucose ayant un taux garanti de gluten inférieur à 20 ppm, quel que soit le taux de gluten de la matière première.

Un autre but de la présente invention est de fournir un procédé simple pour préparer des sirops de glucose ayant un taux de gluten inférieur à 20 ppm, ledit procédé ne nécessitant pas d'adaptation des lignes de production actuelles de sirops de glucose, et de multiples étapes supplémentaires.

La demande de brevet DE 41 25 968 décrit un procédé de préparation d'un produit riche en glucose et en protéines. Le procédé consiste à utiliser de manière concomitante une enzyme capable d'hydrolyser le gluten et des enzymes capables d'hydrolyser l'amidon. Le type d'enzyme utilisé n'est toutefois pas précisé dans ce document. Le taux de peptides immunogènes, c'est-à-dire la teneur en gluten, n'est pas mentionnée non plus dans ce document.

La demande de brevet JP 2005323556 décrit une méthode pour obtenir un aliment riche en sucres et en glutamine. Le taux de peptides immunogènes, c'est-à-dire la teneur en gluten, n'est pas mentionnée dans ce document.

La demande de brevet CN101049133 décrit la préparation de sirops de blé riches en azote. Le type d'enzyme utilisé n'est pas précisé dans ce document. Le taux de peptides immunogènes, c'est-à-dire la teneur en gluten, n'est pas mentionnée dans ce document.

L'invention a par conséquent pour objet l'utilisation d'au moins une enzyme catalysant l'hydrolyse du gluten pour la mise en œuvre d'un procédé de préparation d'un sirop de glucose à teneur en gluten inférieure à 20 ppm, à partir d'amidon de céréale choisie dans le groupe du blé, de l'orge, du seigle et de l'épeautre, par mise en contact de ladite au moins une enzyme avec:
- un liquéfiat de lait d'amidon de céréale en phase d'hydrolyse pour obtenir un saccharifiat, ou
- un saccharifiat, éventuellement purifié, dudit amidon de céréale, ledit liquéfiat ou ledit saccharifiat comprenant un taux de gluten compris de 20 à 400 ppm, ladite enzyme étant une prolyl endopeptidase, la quantité d'enzyme étant de 2 ppm, ou comprise de 3 à 20 ppm, ladite teneur en protéines immunostimulantes étant déterminée par la méthode ELISA avec l'anticorps R5.

De façon surprenante, l'utilisation d'au moins une prolyl endopeptidase catalysant l'hydrolyse du gluten au stade du saccharifiat, éventuellement purifié, d'amidon de céréale ou au stade de l'hydrolyse d'un liquéfiat de lait d'amidon de céréale pour former ledit saccharifiat, permet d'obtenir un sirop de glucose à teneur en gluten inférieure à 20 ppm, sans qu'il soit nécessaire d'adapter les installations existantes destinées à produire du sirop de glucose, ou de recourir à de nombreuses étapes supplémentaires (par rapport à un procédé de préparation de sirop de glucose qui ne serait pas « gluten-free»).

Par « gluten », on entend la fraction protéique insoluble des grains de céréales, notamment du blé, de l'orge, du seigle et de l'épeautre.

Le gluten comprend majoritairement des prolamines. Le gluten de blé comprend majoritairement deux types de prolamines, les gliadines (dont le poids moléculaire varie entre 30 et 40 kDa, stabilisées par des ponts disulfures intramoléculaires, protéines monomériques de faible poids moléculaire) et les gluténines, (protéines polymériques de poids moléculaire élevé). Le gluten représente environ 85 % des protéines de blé.

Par « hydrolyse du gluten », on entend l'hydrolyse des protéines immunostimulantes comprises dans le gluten (notamment les gliadines et les gluténines) pour obtenir des peptides non immunostimulants, n'induisant donc pas de réaction allergique. La présence de peptides immunostimulants dans le sirop de glucose et donc la teneur en gluten est déterminée selon la méthode d'analyse et d'échantillonnage décrite dans le *Codex Alimentarius* STAN 118-1979 révisé en 2008 et amendé en 1983 et 2015 mettant en œuvre un essai d'immunoabsorption enzymatique (ELISA) avec l'anticorps R5 (Mendez).

Dans la présente demande de brevet, un produit ayant une « teneur en protéines immunostimulantes comprises dans le gluten, notamment les gliadines et les gluténines, inférieure à 20 ppm » désigne donc un produit dans lequel la teneur en gluten déterminée par un essai d'immunoabsorption enzymatique (ELISA) avec l'anticorps R5 (Mendez) est inférieure à 20 ppm.

Ladite au moins une enzyme est active (non inactivée), c'est-à-dire qu'elle est apte à catalyser l'hydrolyse du gluten.

Par « sirop de glucose », on entend un produit fini choisi parmi les sirops de glucose, sirops de maltose, sirops de glucose-fructose, isoglucoses, et leurs mélanges, selon la définition du *Codex Alimentarius* (CODEX STAN 212-1999).

Le sirop de glucose est une solution aqueuse purifiée et concentrée de saccharides nutritifs notamment obtenus à partir de l'amidon.

Le sirop de glucose a une teneur en équivalent dextrose (D.E.) supérieure ou égale à 20,0 % m/m (exprimée sous forme de D-glucose sur la base du poids sec) et une teneur en solides totaux supérieure ou égale à 70,0 % m/m.

En particulier, les sirops de glucose peuvent contenir au moins 1% en masse de glucose.

Par « saccharifiat », on entend un hydrolysat de liquéfiat de lait d'amidon, c'est-à-dire un lait d'amidon qui a été liquéfié, en particulier par traitement thermique (et éventuellement enzymatique), puis hydrolysé, en particulier par voie enzymatique ou acide, par des méthodes bien connues de l'homme du métier, notamment telles que décrites par Hull (Glucose Syrups Technology and Applications, chapitre 3, 2010 - Wiley-Blackwell Ed., 19-43).

Les saccharifiats ont généralement des teneurs en matières sèches comprises entre 25 et 40 %, et notamment proches de 33 %.

Par « liquéfiat de lait d'amidon en phase d'hydrolyse pour obtenir un saccharifiat », on entend un liquéfiat de lait d'amidon en cours d'hydrolyse, en particulier par voie enzymatique ou acide, pour former un hydrolysat de liquéfiat de lait d'amidon, c'est-à-dire un saccharifiat.

Par « lait d'amidon », on entend de l'amidon en suspension aqueuse instable ayant généralement des teneurs en matières sèches comprises entre 30 et 50 %, et notamment proches de 35 %, tel qu'habituellement obtenu à l'aide du procédé Tricanter® Process (décrit dans le brevet US8309152) dont le schéma est donné à la figure 2.

Par « liquéfiât de lait d'amidon », on entend un lait d'amidon empesé par voie thermique et mécanique puis soumis à une étape de liquéfaction (ou déviscosification) par voie enzymatique à l'aide d'une enzyme type α-amylase, par des méthodes bien connues de l'homme du métier, et notamment telles que décrites par Hull (Glucose Syrups Technology and Applications, chapitre 3, 2010 - Wiley-Blackwell Ed., 19-43).

Le saccharifiat peut éventuellement être purifié préalablement à la mise en contact avec ladite au moins une enzyme. Cette purification peut être faite par toutes méthodes connues de l'homme du métier, et notamment celles décrites par Singh et al. (Process design and economic analysis of a ceramic membrane system for microfiltration of corn starch hydrolysate, 1998. Journal of Food Engineering, 38, 57-67.), ou encore Hinkova et al. (Mineral membrane filtration in refinement of starch hydrolysates, 2002. Journal of Food engineering, 61, 521-526).

En particulier, la purification peut se faire par filtration, pour retirer les impuretés macroscopiques du produit (fibres, lipides, protéines).

Le produit purifié passant à travers les moyens de filtration est appelé perméat. Le flux d'impuretés retenu par la membrane est appelé rétentat.

Cette filtration peut se faire par exemple par microfiltration tangentielle sur membrane céramique.

Selon un mode de réalisation avantageux, l'invention concerne l'utilisation telle que définie précédemment, dans laquelle la teneur en gluten du sirop de glucose est inférieure à 19, 18, 17, 16, 15, 14, 13, 12, 11, 10, 9, 8, 7, 6, 5, 4, 3, 2, 1, ou est égale à 0 ppm.

Selon un mode de réalisation avantageux, l'invention concerne l'utilisation telle que définie précédemment, dans laquelle le taux de réduction du gluten dans le saccharifiat avant et après la mise en contact avec ladite enzyme est compris de 50 à 100%, en particulier de 55, 60, 65, 70, 75, 80, 85, 90, 95 ou 99, à 100%.

Selon un mode de réalisation avantageux, l'invention concerne l'utilisation telle que définie précédemment, dans laquelle la céréale est non germée et est choisie parmi le blé, l'épeautre, l'orge et le seigle, ladite céréale étant en particulier le blé.

Par « céréale non germée», on entend en particulier une céréale qui n'est pas du malt, plus particulièrement une céréale qui n'est pas du malt d'orge.

L 'invention concerne l'utilisation telle que définie précédemment, dans laquelle la céréale est choisie parmi le blé, l'épeautre, l'orge et le seigle, ladite céréale étant en particulier le blé.

L 'invention concerne l'utilisation telle que définie précédemment, dans laquelle ladite au moins une enzyme est choisie parmi les prolyl endopeptidases, en particulier PROLINE SPECIFIC PROTEASE, BREWERS CLAREX®, ISOZYM®CLEAR, ou leurs mélanges, ladite enzyme étant éventuellement associée à une ou plusieurs leucyl aminopeptidases ou L-glutamine aminohydrolases, telle que la L-glutamine aminohydrolase *d'Aspergillus niger* (SUMIZYME® GT).

Cette enzyme est différente de celles qui peuvent éventuellement être utilisées lors de la liquéfaction d'un lait d'amidon de céréales pour obtenir un liquéfiat de lait d'amidon, et lors de l'hydrolyse du liquéfiat de lait d'amidon pour obtenir un saccharifiat d'amidon de céréale.

Selon un mode de réalisation avantageux, l'invention concerne l'utilisation telle que définie précédemment, dans laquelle la mise en contact se fait avec une quantité d'enzyme comprise de 1 à 20 mg par kg de saccharifiat.

La quantité d'enzyme nécessaire pour obtenir un sirop de glucose dans lequel la teneur en gluten résiduel est inférieure à 20 ppm est fonction de la teneur en gluten de la matière première initiale, c'est-à-dire du liquéfiat ou du saccharifiat. Plus la teneur en gluten dans la matière première est élevée, plus la quantité d'enzyme à ajouter doit être augmentée. La teneur en gluten du liquéfiat ou du saccharifiat est comprise de 20 à 400 ppm et on ajustera donc la quantité d'enzyme à une valeur de 2 ou de 3 à 20 ppm, de manière à obtenir une teneur en gluten dans le sirop de glucose inférieure à 20 ppm après traitement enzymatique.

Par LAPU ("Leucine Aminopeptidase Unit"), on entend la quantité d'enzyme hydrolysant 1µmol de L-leucine-p-nitroanilide par minute à pH 8,0 et à 40°C comme chromophore, la couleur jaune obtenue étant mesurée à 405 nm. 1 Unité Leucine Amino Peptidase (LAPU) est la quantité d'enzyme qui décompose 1mmol de substrat par minute dans les conditions suivantes: 26 mM de L-leucine-p-nitroanilide comme substrat, 0,1 M de tampon Tris (pH 8,0), 40°C avec un temps de réaction de 10 minutes.

Selon un mode de réalisation avantageux, l'invention concerne l'utilisation telle que définie précédemment, dans laquelle ladite au moins une enzyme est une prolyl endopeptidase et a une activité catalytique comprise de 0,005 à 0,80 PPU par kg de saccharifiat.

Une unité de Protéase Proline (PPU) est définie comme la quantité d'enzyme qui libère 1 µmole de p-nitroanilide par minute dans les conditions spécifiées et à une concentration en substrat de 0,37 mM en utilisant CBZ-Gly-Pro-pNA (Bachern, Bubendorf, Suisse, par exemple) en tant que substrat à 37°C dans un tampon citrate / phosphate disodique tampon de pH 4,6 (ou pH 5). Les produits réactionnels sont suivis par spectrophotométrie à 405 nm. L'augmentation de l'absorbance à 405 nm dans le temps est une mesure de l'activité enzymatique.

Une unité L-glutamine aminohydrolase (U) est définie au sens de la présente invention comme la quantité d'enzyme nécessaire pour libérer 1 µmole de glutamate par minute dans les conditions spécifiées et à une concentration de substrat de 80 mM de L-glutamine à 37°C dans un tampon acétate de sodium à pH 4,9. Le produit réactionnel est suivi par spectrophotométrie à 340 nm.

Les activités enzymatiques pour certaines enzymes sont données à titre d'exemple dans le tableau 1 suivant :

| nom commercial | type | poids / kg saccharifiat | | activité / kg saccharifiat | |
|---|---|---|---|---|---|
| BREWERS CLAREX® | prolyl endopeptidase | 1 mg | 20 mg | 0,005 PPU | 0,100 PPU |
| COROLASE® LAP | leucyl aminopeptidase | 1 mg | 20 mg | 0,350 LAPU | 7,000 LAPU |
| FLAVORPRO™766M DP | leucyl aminopeptidase | 1 mg | 20 mg | 0,203 LAPU | 4,060 LAPU |
| FLAVORPRO™ 795MDP | leucyl aminopeptidase | 1 mg | 20 mg | 0,357 LAPU | 7,140 LAPU |
| FLAVOURZYME® 500L | leucyl aminopeptidase | 1 mg | 20 mg | 0,500 LAPU | 10,000 LAPU |
| FLAVOURZYME® 1000L | leucyl aminopeptidase | 1 mg | 20 mg | 1,000 LAPU | 20,000 LAPU |
| ISOZYM® CLEAR | prolyl endopeptidase | 1 mg | 20 mg | 0,005 PPU | 0,100 PPU |
| PROLINE SPECIFIC PROTEASE | prolyl endopeptidase | 1 mg | 20 mg | 0,040 PPU | 0,800 PPU |
| PROMOD™ 863MDP | leucyl aminopeptidase | 1 mg | 20 mg | 0,232 LAPU | 4,640 LAPU |
| SUMIZYME® GT | L-glutamine aminohydrolase | 1 mg | 20 mg | 0,300 U | 6,000 U |

Selon un mode de réalisation avantageux, l'invention concerne l'utilisation telle que définie précédemment, dans laquelle ledit sirop de glucose a une teneur en équivalent dextrose supérieure ou égale à 20,0 % m/m, la teneur en équivalent dextrose étant en particulier comprise de 20 à 99,9%, plus particulièrement de 25 à 99,9%, encore plus particulièrement de 31 à 99,9%.

L'équivalent dextrose (« dextrose équivalent » ou D.E.) représente le degré d'hydrolyse de l'amidon.

Plus le D.E. est élevé, plus l'hydrolyse est poussée, et donc plus la proportion en sucres simples sera élevée. Un D.E. de zéro représenterait l'amidon lui-même, un D.E. de 100 représenterait du dextrose pur, soit un amidon totalement hydrolysé.

Le DE est déterminé en fonction du taux de présence de sucres réducteurs.

Le DE peut être déterminé par les techniques connues de l'homme du métier, notamment via l'utilisation d'acide 3,5-dinitrosalicylique, d'un kit enzymatique ou de liqueur de Fehling.

En particulier, la méthode normalisée ISO 5377 :1981 (méthode Lane et Eynon à titre constant), peut être utilisée pour la détermination du pouvoir réducteur et de l'équivalent en dextrose pour tous les produits d'hydrolyse de l'amidon ou de la fécule (via l'utilisation de liqueur de Fehling et en utilisant le bleu de méthylène comme indicateur).

Selon un mode de réalisation avantageux, l'invention concerne l'utilisation telle que définie précédemment, dans laquelle la matière sèche du sirop de glucose est supérieure à 70%, ladite matière sèche étant en particulier comprise de 70 à 100%, plus particulièrement de 70 à 90%, encore plus particulièrement de 70 à 86%.

Par « matière sèche » (MS), on entend ce que l'on obtient lorsqu'on retire l'eau du sirop de glucose.

Le pourcentage de matière sèche est le ratio entre la masse de la matière sèche et la masse de la matière non-sèche (hydratée).

La matière sèche est par exemple mesurée en pesant dans une coupelle tarée exactement environ 2 g de produit qui est ensuite placée pendant deux heures au four à une température de 103°C. A l'issue, la masse sèche est mesurée et la MS est obtenue par la formule : $% MS = \frac{{m}_{sèche} - {m}_{coupelle vide}}{{m}_{produit pesé}} \times 100$

La matière sèche peut être déterminée par les techniques connues de l'homme du métier, en particulier par les méthodes normalisées ISO 1742:1980 (méthode par étuvage sous pression réduite) ou ISO 1743:1982 (méthode réfractométrique).

Dans un mode de réalisation plus avantageux, la présente invention concerne l'utilisation telle que décrite ci-dessus d'au moins deux enzymes de classes différentes catalysant l'hydrolyse du gluten pour la mise en œuvre d'un procédé de préparation d'un sirop de glucose à teneur en gluten inférieure à 20 ppm, à partir d'amidon de céréale, par mise en contact desdites au moins deux enzymes avec:
- un liquéfiat de lait d'amidon de céréale en phase d'hydrolyse pour obtenir un saccharifiat, ou
- un saccharifiat, éventuellement purifié, dudit amidon de céréale, au moins une des deux enzymes étant une prolyl endopeptidase.

Les Inventeurs de la présente invention ont également mis en évidence qu'une seconde enzyme permettait de diminuer la quantité de prolyl endopeptidase nécessaire pour obtenir une réduction de la teneur en gluten à moins de 20 ppm.

De manière encore plus avantageuse, la présente invention concerne l'utilisation telle que définie ci-dessus d'au moins deux enzymes catalysant l'hydrolyse du gluten, dont l'une est une prolyl endopeptidase, lesdites au moins deux enzymes étant choisies dans le groupe constitué de :
- une prolyl endopeptidase et une L-glutamine aminohydrolase,
- une prolyl endopeptidase et une leucyl aminopeptidase,
- une prolyl endopeptidase, une leucyl aminopeptidase et une L-glutamine aminohydrolase.

De manière encore plus avantageuse, la présente invention concerne l'utilisation telle que définie ci-dessus d'au moins deux enzymes catalysant l'hydrolyse du gluten, lesdites au moins deux enzymes étant choisies dans le groupe constitué de :
- une prolyl endopeptidase ayant une activité catalytique comprise de 0,005 à 0,80 PPU par kg de saccharifiat et une leucyl aminopeptidase ayant une activité catalytique comprise de 0,2 à 20,0 LAPU par kg de saccharifiat,
- une prolyl endopeptidase ayant une activité catalytique comprise de 0,005 à 0,80 PPU par kg de saccharifiat et une L-glutamine aminohydrolase, telle que la L-glutamine aminohydrolase *d'Aspergillus niger* (SUMIZYME® GT),
-
- une prolyl endopeptidase ayant une activité catalytique comprise de 0,005 à 0,80 PPU par kg de saccharifiat, une leucyl aminopeptidase ayant une activité catalytique comprise de 0,2 à 20,0 LAPU par kg de saccharifiat et une L-glutamine aminohydrolase, telle que la L-glutamine aminohydrolase *d'Aspergillus niger* (SUMIZYME® GT) ayant une activité comprise de 0,3 à 6,0 U par kg de saccharifiat,
en particulier une prolyl endopeptidase ayant une activité catalytique comprise de 0,005 à 0,80 PPU par kg de saccharifiat et une leucyl aminopeptidase ayant une activité catalytique comprise de 0,2 à 20,0 LAPU par kg de saccharifiat, éventuellement en présence d'une L-glutamine aminohydrolase telle que la L-glutamine aminohydrolase *d'Aspergillus niger* (SUMIZYME® GT) ayant une activité comprise de 0,3 à 6,0 U par kg de saccharifiat.

La quantité d'enzyme nécessaire pour obtenir un sirop de glucose dans lequel la teneur en gluten résiduel est inférieure à 20 ppm est fonction de la teneur en gluten de la matière première initiale, c'est-à-dire du liquéfiat ou du saccharifiat. Plus la teneur en gluten dans la matière première est élevée, plus la quantité d'enzyme à ajouter doit être augmentée. La teneur en gluten du liquéfiat ou du saccharifiat est comprise de 20 à 400 ppm et on ajustera donc la quantité d'enzyme à une valeur de 2 ou de 3 à 20 ppm, de manière à obtenir une teneur en gluten dans le sirop de glucose inférieure à 20 ppm après traitement enzymatique.

L'invention concerne également un procédé de préparation (I) d'un sirop de glucose à teneur en gluten inférieure à 20 ppm, ledit procédé comprenant les étapes suivantes :
- une étape de mise en contact d'au moins une enzyme catalysant l'hydrolyse du gluten avec :
   - un liquéfiat de lait d'amidon de céréale choisie dans le groupe du blé, de l'orge, du seigle ou de l'épeautre, en phase d'hydrolyse pour obtenir un saccharifrat, ou
   - un saccharifiat d'amidon de céréale, choisie dans le groupe du blé, de l'orge, du seigle ou de l'épeautre, éventuellement purifié, ledit liquéfiât ou ledit saccharifiat comprenant un taux de gluten compris entre 20 et 400 ppm, ladite enzyme étant une prolyl endopeptidase, la quantité de ladite enzyme étant comprise entre 3 et 20 ppm, ou est de 2 ppm, ladite teneur en protéines immunostimulantes étant déterminée par la méthode ELISA avec l'anticorps R5, pour obtenir un saccharifiat d'amidon de céréale, éventuellement purifié, à teneur en gluten inférieure à 20 ppm;
- une étape de concentration du saccharifiat d'amidon de céréale, purifié, à teneur en gluten inférieure à 20 ppm, pour obtenir ledit sirop de glucose.

L'invention concerne également un procédé de préparation (II) d'un sirop de glucose à teneur en gluten inférieure à 20 ppm, ledit procédé comprenant les étapes suivantes :
- une étape de mise en contact de la prolyl endopeptidase avec un saccharifiat d'amidon de céréale, éventuellement purifié, pour obtenir un saccharifiat d'amidon de céréale, éventuellement purifié, à teneur en gluten inférieure à 20 ppm;
- une étape de concentration du saccharifiat d'amidon de céréale, purifié, à teneur en gluten inférieure à 20 ppm, pour obtenir ledit sirop de glucose.

L'invention concerne également un procédé de préparation (III) d'un sirop de glucose à teneur en gluten inférieure à 20 ppm, ledit procédé comprenant les étapes suivantes :
- une étape de mise en contact de la prolyl endopeptidase
- une étape de concentration du saccharifiat d'amidon de céréale, purifié, à teneur en gluten inférieure à 20 ppm, pour obtenir ledit sirop de glucose.

Dans ce cas, l'hydrolyse du liquéfiat de lait d'amidon en saccharifiat et la mise en contact avec l'enzyme sont concomitantes.

Par « étape de concentration », on entend toute étape destinée à augmenter la matière sèche du saccharifiat d'amidon de céréale.

Cette étape permet notamment d'augmenter la matière sèche du saccharifiat d'amidon de céréale à une valeur supérieure ou égale à 70%, pour obtenir ledit sirop de glucose.

La concentration peut se faire, par toute méthode connue de l'homme du métier, en particulier par évaporation et notamment par flot tombant.

Selon un mode de réalisation avantageux (la), l'invention concerne un procédé tel que défini précédemment, comprenant les étapes suivantes :
- une étape de mise en contact de la prolyl endopeptidase avec un saccharifiat d'amidon de céréale, pour obtenir un saccharifiat d'amidon de céréale, à teneur en gluten inférieure à 20 ppm;
- une ou plusieurs étapes de purification du saccharifiat d'amidon de céréale, à teneur en gluten inférieure à 20 ppm, pour obtenir un saccharifiat d'amidon de céréale, purifié, à teneur en gluten inférieure à 20 ppm;
- une étape de concentration du saccharifiat d'amidon de céréale, purifié, à teneur en gluten inférieure à 20 ppm, pour obtenir ledit sirop de glucose.

Dans ce cas, le saccharifiat n'est pas purifié avant l'étape de mise en contact avec l'enzyme, mais après cette étape, pour former après concentration le sirop de glucose.

La mise en contact avec l'enzyme avant la purification permet de réduire par voie enzymatique les traces de gluten présentes dans le saccharifiat, sans être tributaires de l'efficacité de captation des différentes étapes de purification, efficacité qui est directement proportionnelle à la charge initiale de gluten dans la matière première (lait d'amidon qui devient liquéfiat qui devient saccharifiat), charge initiale qui peut être fluctuante.

La ou les étapes de purification du saccharifiat d'amidon de céréale sont par exemple la filtration, la percolation sur charbons actifs et/ou la déminéralisation.

La ou les étapes de purification du saccharifiat d'amidon de céréale permettent d'obtenir après l'étape de concentration un sirop de glucose clair, limpide et déminéralisé.

Des impuretés telles que des fibres, matières grasses, colorants, minéraux, protéines, sont éliminées pour augmenter la pureté du sirop de glucose obtenu à l'issue du procédé.

Selon un mode de réalisation avantageux, l'invention concerne un procédé (Ib) tel que défini précédemment, comprenant les étapes suivantes :
- une étape de mise en contact de la prolyl endopeptidase avec un saccharifiat d'amidon de céréale, purifié, pour obtenir un saccharifiat d'amidon de céréale, purifié, à teneur en gluten inférieure à 20 ppm;
- une étape de concentration du saccharifiat d'amidon de céréale, purifié, à teneur en gluten inférieure à 20 ppm, pour obtenir ledit sirop de glucose.

Dans ce cas, le saccharifiat est purifié avant l'étape de mise en contact avec l'enzyme.

Lorsque la purification est une filtration, en particulier une microfiltration, le saccharifiat purifié est un perméat, avec lequel se fait la mise en contact avec l'enzyme.

Il n'y a alors pas d'étape de purification après la mise en contact avec l'enzyme.

Ce mode de réalisation peut permettre de mettre en œuvre moins d'enzyme (notamment de type leucyl aminopeptidase ou prolyl endopeptidase) puisque les étapes préalables de purification peuvent déjà permettre de retenir au moins une partie du gluten résiduel présent dans la matière première (lait d'amidon qui devient liquéfiat qui devient saccharifiat). Les coûts enzymatiques sont donc réduits.

Selon un mode de réalisation avantageux, l'invention concerne un procédé (Ic) tel que défini précédemment, comprenant les étapes suivantes :
- une étape de mise en contact de la prolyl endopeptidase avec un saccharifiat d'amidon de céréale, purifié, pour obtenir un saccharifiat d'amidon de céréale, purifié, à teneur en gluten inférieure à 20 ppm;
- une ou plusieurs étapes de purification du saccharifiat d'amidon de céréale, à teneur en gluten inférieure à 20 ppm, pour obtenir un saccharifiat d'amidon de céréale, purifié avant et après la mise en contact avec l'enzyme, à teneur en gluten inférieure à 20 ppm ;
- une étape de concentration du saccharifiat d'amidon de céréale, purifié avant et après la mise en contact avec l'enzyme, à teneur en gluten inférieure à 20 ppm, pour obtenir ledit sirop de glucose.

Dans ce cas, le saccharifiat est purifié avant et après l'étape de mise en contact avec l'enzyme.

Lorsque la première purification est une filtration, en particulier une microfiltration, le saccharifiat purifié est un perméat, avec lequel se fait la mise en contact avec l'enzyme.

Le perméat est à nouveau purifié après la mise en contact avec l'enzyme, à l'occasion d'une deuxième purification, donnant le sirop de glucose après concentration.

Ce mode de réalisation peut permettre de mettre en œuvre moins d'enzyme (notamment de type leucyl aminopeptidase, prolyl endopeptidase L-glutamine aminohydrolase) puisque les étapes préalables de purification peuvent déjà permettre de retenir au moins une partie du gluten résiduel présent dans la matière première (lait d'amidon qui devient liquéfiat qui devient saccharifiat). Les coûts enzymatiques sont donc réduits.

En outre, les résidus protéiques générés lors de l'hydrolyse enzymatique sont susceptibles d'être éliminés lors de l'étape de purification du saccharifiat d'amidon de céréale, en particulier par fixation sur résines échangeuses d'ions.

Selon un mode de réalisation avantageux, l'invention concerne un procédé tel que défini précédemment, dans lequel la ou les étapes de purification sont choisies parmi la filtration, la percolation sur charbons actifs et la déminéralisation.

Selon un mode de réalisation avantageux, l'invention concerne un procédé (IIa) tel que défini précédemment, dans lequel le saccharifiat d'amidon de céréale est obtenu par hydrolyse d'un liquéfiat de lait d'amidon de céréales, en particulier par traitement thermique (et éventuellement enzymatique), puis hydrolyse, en particulier par voie enzymatique ou acide, par des méthodes bien connues de l'homme du métier et telles que décrites par Hull (Glucose Syrups Technology and Applications, chapitre 3, 2010 - Wiley-Blackwell Ed., 19-43).

Selon un mode de réalisation avantageux, l'invention concerne un procédé tel que défini précédemment, dans lequel le liquéfiat de lait d'amidon de céréale est obtenu par liquéfaction d'un lait d'amidon de céréale.

Par liquéfaction on entend l'empesage du lait d'amidon par voie thermique et mécanique suivi d'une étape de liquéfaction (ou déviscosification) par voie enzymatique à l'aide d'une enzyme type α-amylase, par des méthodes bien connues de l'homme du métier et telles que décrites par Hull (Glucose Syrups Technology and Applications, chapitre 3, 2010 - Wiley-Blackwell Ed., 19-43).

Selon un mode de réalisation avantageux, l'invention concerne un procédé (IIa1) tel que défini précédemment, comprenant les étapes suivantes :
- une étape de liquéfaction d'un lait d'amidon de céréales pour obtenir un liquéfiat de lait d'amidon ;
- une étape d'hydrolyse du liquéfiat de lait d'amidon pour obtenir un saccharifiat d'amidon de céréale ;
- une étape de mise en contact de la prolyl endopeptidase avec un saccharifiat d'amidon de céréale, éventuellement purifié, pour obtenir un saccharifiat d'amidon de céréale, éventuellement purifié, à teneur en gluten inférieure à 20 ppm ;
- une étape de concentration du saccharifiat d'amidon de céréale, purifié, à teneur en gluten inférieure à 20 ppm, pour obtenir ledit sirop de glucose.

Selon un mode de réalisation avantageux, l'invention concerne un procédé (IIa2) tel que défini précédemment, comprenant les étapes suivantes :
- une étape de liquéfaction d'un lait d'amidon de céréales pour obtenir un liquéfiat de lait d'amidon ;
- une étape d'hydrolyse du liquéfiat de lait d'amidon pour obtenir un saccharifiat d'amidon de céréale ;
- une étape de mise en contact de la prolyl endopeptidase avec un saccharifiat d'amidon de céréale, pour obtenir un saccharifiat d'amidon de céréale, à teneur en gluten inférieure à 20 ppm;
- une ou plusieurs étapes de purification du saccharifiat d'amidon de céréale, à teneur en gluten inférieure à 20 ppm, pour obtenir un saccharifiat d'amidon de céréale, purifié, à teneur en gluten inférieure à 20 ppm ;
- une étape de concentration du saccharifiat d'amidon de céréale, purifié, à teneur en gluten inférieure à 20 ppm, pour obtenir ledit sirop de glucose.

Selon un mode de réalisation avantageux, l'invention concerne un procédé (IIa3) tel que défini précédemment, comprenant les étapes suivantes :
- une étape de liquéfaction d'un lait d'amidon de céréales pour obtenir un liquéfiat de lait d'amidon ;
- une étape d'hydrolyse du liquéfiat de lait d'amidon pour obtenir un saccharifiat d'amidon de céréale ;
- une étape de purification du saccharifiat d'amidon de céréale, pour obtenir un saccharifiat d'amidon de céréale, purifié ;
- une étape de mise en contact de la prolyl endopeptidase avec un saccharifiat d'amidon de céréale, purifié, pour obtenir un saccharifiat d'amidon de céréale, purifié, à teneur en gluten inférieure à 20 ppm;
- une étape de concentration du saccharifiat d'amidon de céréale, purifié, à teneur en gluten inférieure à 20 ppm, pour obtenir ledit sirop de glucose.

Selon un mode de réalisation avantageux, l'invention concerne un procédé (IIa4) tel que défini précédemment, comprenant les étapes suivantes :
- une étape de liquéfaction d'un lait d'amidon de céréales pour obtenir un liquéfiat de lait d'amidon ;
- une étape d'hydrolyse du liquéfiat de lait d'amidon pour obtenir un saccharifiat d'amidon de céréale ;
- une étape de purification du saccharifiat d'amidon de céréale, pour obtenir un saccharifiat d'amidon de céréale, purifié ;
- une étape de mise en contact de la prolyl endopeptidase avec un saccharifiat d'amidon de céréale, purifié, pour obtenir un saccharifiat d'amidon de céréale, purifié, à teneur en gluten inférieure à 20 ppm;
- une ou plusieurs étapes de purification du saccharifiat d'amidon de céréale, à teneur en gluten inférieure à 20 ppm, pour obtenir un saccharifiat d'amidon de céréale, purifié avant et après la mise en contact avec l'enzyme, à teneur en gluten inférieure à 20 ppm ;
- une étape de concentration du saccharifiat d'amidon de céréale, purifié avant et après la mise en contact avec l'enzyme, à teneur en gluten inférieure à 20 ppm, pour obtenir ledit sirop de glucose.

Selon un mode de réalisation avantageux, l'invention concerne un procédé tel que défini précédemment, dans lequel ladite au moins une enzyme est inactivée au cours de l'étape ou des étapes de purification du saccharifiat d'amidon de céréale, à teneur en gluten inférieure à 20 ppm.

Selon un mode de réalisation avantageux, l'invention concerne un procédé tel que défini précédemment, comprenant les étapes suivantes :
- une étape de liquéfaction d'un lait d'amidon de céréales pour obtenir un liquéfiat de lait d'amidon ;
- une étape d'hydrolyse du liquéfiat de lait d'amidon pour obtenir un saccharifiat d'amidon de céréale ;
- une étape de purification du saccharifiat d'amidon de céréale, pour obtenir un saccharifiat d'amidon de céréale, purifié ;
- une étape de mise en contact de la prolyl endopeptidase avec un saccharifiat d'amidon de céréale, purifié, pour obtenir un saccharifiat d'amidon de céréale, purifié, à teneur en gluten inférieure à 20 ppm;
- une étape d'inactivation de ladite enzyme dans ledit saccharifiat d'amidon de céréale, purifié;
- une étape de concentration du saccharifiat d'amidon de céréale, purifié, à teneur en gluten inférieure à 20 ppm, pour obtenir ledit sirop de glucose.

Selon un mode de réalisation avantageux, l'invention concerne un procédé tel que défini précédemment, dans lequel la teneur en gluten du sirop de glucose est inférieure à 19, 18, 17, 16, 15, 14, 13, 12, 11, 10, 9, 8, 7, 6, 5, 4, 3, 2, 1 ou est égale à 0 ppm.

Selon un mode de réalisation avantageux, l'invention concerne un procédé tel que défini précédemment, dans lequel la teneur en gluten du saccharifiat d'amidon de céréale, purifié, est, après la mise en contact avec l'enzyme, inférieure à 19, 18, 17, 16, 15, 14, 13, 12, 11, 10, 9, 8, 7, 6, 5, 4, 3, 2, 1 ou est égale à 0 ppm.

Selon un mode de réalisation avantageux, l'invention concerne un procédé tel que défini précédemment, dans lequel le taux de réduction du gluten dans le saccharifiat avant et après la mise en contact avec ladite enzyme est compris de 50 à 100%, en particulier de 55, 60, 65, 70, 75, 80, 85, 90, 95 ou 99, à 100%.

Selon un mode de réalisation avantageux, l'invention concerne un procédé tel que défini précédemment, dans lequel la céréale est non germée et est choisie parmi le blé, l'épeautre, l'orge et le seigle, ladite céréale étant en particulier le blé.

Selon un mode de réalisation avantageux, l'invention concerne un procédé tel que défini précédemment, dans lequel ladite au moins une enzyme est choisie parmi les prolyl endopeptidases, en particulier PROLINE SPECIFIC PROTEASE, BREWERS CLAREX®, ISOZYM® CLEAR, ou leurs mélanges, ladite enzyme étant éventuellement associée à une ou plusieurs leucyl aminopeptidase ou L-glutamine aminohydrolases, telle que la L-glutamine aminohydrolase *d'Aspergillus niger* (SUMIZYME® GT).

Selon un mode de réalisation avantageux, l'invention concerne un procédé tel que défini précédemment, dans lequel la mise en contact se fait avec une quantité d'enzyme comprise de 1 à 20 mg par kg de saccharifiat.

La quantité d'enzyme nécessaire pour obtenir un sirop de glucose dans lequel la teneur en gluten résiduel est inférieure à 20 ppm est fonction de la teneur en gluten de la matière première initiale, c'est-à-dire du liquéfiat ou du saccharifiat. Plus la teneur en gluten dans la matière première est élevée, plus la quantité d'enzyme à ajouter doit être augmentée. La teneur en gluten du liquéfiat ou du saccharifiat est comprise de 20 à 400 ppm et on ajustera donc la quantité d'enzyme à une valeur de 2 ou de 3 à 20 ppm, de manière à obtenir une teneur en gluten dans le sirop de glucose inférieure à 20 ppm après traitement enzymatique.

Selon un mode de réalisation avantageux, l'invention concerne un procédé tel que défini précédemment, dans lequel ladite au moins une enzyme est une prolyl endopeptidase et a une activité catalytique comprise de 0,005 à 0,80 PPU par kg de saccharifiat.

Dans un mode de réalisation plus avantageux, la présente invention concerne un procédé de préparation d'un sirop de glucose à teneur en gluten inférieure à 20 ppm à partir d'amidon de céréale tel que décrit ci-dessus, comprenant une étape de mise en contact d'au moins deux enzymes de classes différentes catalysant l'hydrolyse du gluten avec un liquéfiat de lait d'amidon de céréale en phase d'hydrolyse pour obtenir un saccharifiat, ou un saccharifiat d'amidon de céréale, éventuellement purifié, au moins une des deux enzymes étant une prolyl endopeptidase.

De manière encore plus avantageuse, les au moins deux enzymes de classes différentes catalysant l'hydrolyse du gluten sont choisies dans le groupe constitué de :
- une prolyl endopeptidase et une leucyl aminopeptidase, et
- une prolyl endopeptidase et une L-glutamine aminohydrolase, et
- une prolyl endopeptidase, une leucyl aminopeptidase et une L-glutamine aminohydrolase.

Dans ce qui précède et dans ce qui suit, et sans indications contraires, le saccharifiat peut éventuellement être préalablement purifié. Ainsi, le terme « saccharifiat » peut correspondre au saccharifiat en tant que tel, non préalablement purifié ou, à un perméat, correspondant à un saccharifiat préalablement purifié.

Selon un mode de réalisation avantageux, l'invention concerne un procédé tel que défini précédemment, dans lequel ledit sirop de glucose a une teneur en équivalent dextrose supérieure ou égale à 20,0 % m/m, la teneur en équivalent dextrose étant en particulier comprise de 20 à 99,9%, plus particulièrement de 25 à 99,9%, encore plus particulièrement de 31 à 99,9%.

Selon un mode de réalisation avantageux, l'invention concerne un procédé tel que défini précédemment, dans lequel la matière sèche du sirop de glucose est supérieure à 70%, ladite matière sèche étant en particulier comprise de 70 à 100%, plus particulièrement de 70 à 90%, encore plus particulièrement de 70 à 86%.

L'invention concerne également un sirop de glucose susceptible d'être obtenu par un procédé tel que défini précédemment.

L'invention concerne également un sirop de glucose à teneur en gluten inférieure à 20 ppm comprenant de 1 à 55 ppm, notamment de 1 à 20 ppm, en particulier de 1 à 10 ppm et encore plus particulièrement de 3 à 6 ppm, d'une enzyme catalysant l'hydrolyse du gluten. L'invention concerne également un sirop de glucose à teneur en gluten inférieure à 20 ppm comprenant de 0,005 à 0,8 PPU et/ou 0,2 à 20 LAPU d'au moins une enzyme catalysant l'hydrolyse du gluten.

L'invention concerne également un sirop de glucose à teneur en gluten inférieure à 20 ppm comprenant 2 ou de 3 à 20 ppm, de prolyl endopeptidase ladite enzyme, éventuellement inactivée, étant :
- une prolyl endopeptidase ayant une activité catalytique comprise de 0,005 à 0,80 PPU par kg de saccharifiat,
- une prolyl endopeptidase ayant une activité catalytique comprise de 0,005 à 0,80 PPU par kg de saccharifiat et une leucyl aminopeptidase ayant une activité catalytique comprise de 0,2 à 20,0 LAPU par kg de saccharifiat,
- une prolyl endopeptidase ayant une activité catalytique comprise de 0,005 à 0,80 PPU par kg de saccharifiat et une L-glutamine aminohydrolase ayant une activité comprise de 0,3 à 6,0 U par kg de saccharifiat, ou
- une prolyl endopeptidase ayant une activité catalytique comprise de 0,005 à 0,80 PPU par kg de saccharifiat, une leucyl aminopeptidase ayant une activité catalytique comprise de 0,2 à 20,0 LAPU par kg de saccharifiat et une L-glutamine aminohydrolase ayant une activité comprise de 0,3 à 6,0 U par kg de saccharifiat,
la teneur en gluten du sirop de glucose étant en particulier inférieure à 19, 18, 17, 16, 15, 14, 13, 12, 11, 10, 9, 8, 7, 6, 5, 4, 3, 2 ou 1 ppm.

Selon un mode de réalisation avantageux, l'invention concerne un sirop de glucose tel que défini précédemment, dans lequel ladite enzyme est inactivée. Au sens de la présente invention, l'enzyme est inactivée en soumettant le mélange réactionnel contenant l'enzyme à au moins un traitement visant à supprime l'activité hydrolytique de l'enzyme au cours de l'étape ou des étapes de purification du saccharifiat.

Selon un mode de réalisation avantageux, l'invention concerne un sirop de glucose tel que défini précédemment, dans lequel la teneur en gluten du sirop de glucose est inférieure à 19, 18, 17, 16, 15, 14, 13, 12, 11, 10, 9, 8, 7, 6, 5, 4, 3, 2 ou 1 ppm.

Selon un mode de réalisation avantageux, l'invention concerne un sirop de glucose tel que défini précédemment, dans lequel ladite au moins une enzyme est choisie parmi les prolyl endopeptidases, en particulier PROLINE SPECIFIC PROTEASE, BREWERS CLAREX®, ISOZYM® CLEAR, ou leurs mélanges, ladite enzyme étant éventuellement associée à une ou plusieurs leucyl aminopeptidases ou L-glutamine aminohydrolases, telle que la L-L-glutamine aminohydrolase *d'Aspergillus niger* (SUMIZYME® GT).

Selon un mode de réalisation avantageux, l'invention concerne un sirop de glucose tel que défini précédemment, dans lequel ledit sirop de glucose a une teneur en équivalent dextrose supérieure ou égale à 20,0 % m/m, la teneur en équivalent dextrose étant en particulier comprise de 20 à 99,9%, plus particulièrement de 25 à 99,9%, encore plus particulièrement de 31 à 99,9%.

Selon un mode de réalisation avantageux, l'invention concerne un sirop de glucose tel que défini précédemment, dans lequel la matière sèche du sirop de glucose est supérieure à 70%, ladite matière sèche étant en particulier comprise de 70 à 100%, plus particulièrement de 70 à 90%, encore plus particulièrement de 70 à 86%.

L'invention concerne également un saccharifiat d'amidon de céréale à teneur en gluten inférieure à 20 ppm comprenant 2 ou de 3 à 20 mg par kg de saccharifiat de prolyl endopeptidase.

L'invention concerne également un saccharifiat d'amidon de céréale à teneur en gluten inférieure à 20 ppm comprenant 2 ou de 3 à 20 mg par kg de saccharifiat de prolyl endopeptidase, ladite enzyme étant inactivée.

L'invention concerne également un perméat d'amidon de céréale, à teneur en gluten inférieure à 20 ppm comprenant 2 ou de 3 à 20 mg par kg de perméat de prolyl endopeptidase.

L'invention concerne également un perméat d'amidon de céréale, à teneur en gluten inférieure à 20 ppm comprenant 2 ou de 3 à 20 mg par kg de perméat de prolyl endopeptidase ladite enzyme étant inactivée.

### FIGURES

La **figure 1** illustre un procédé de préparation de sirop de glucose selon la présente invention.

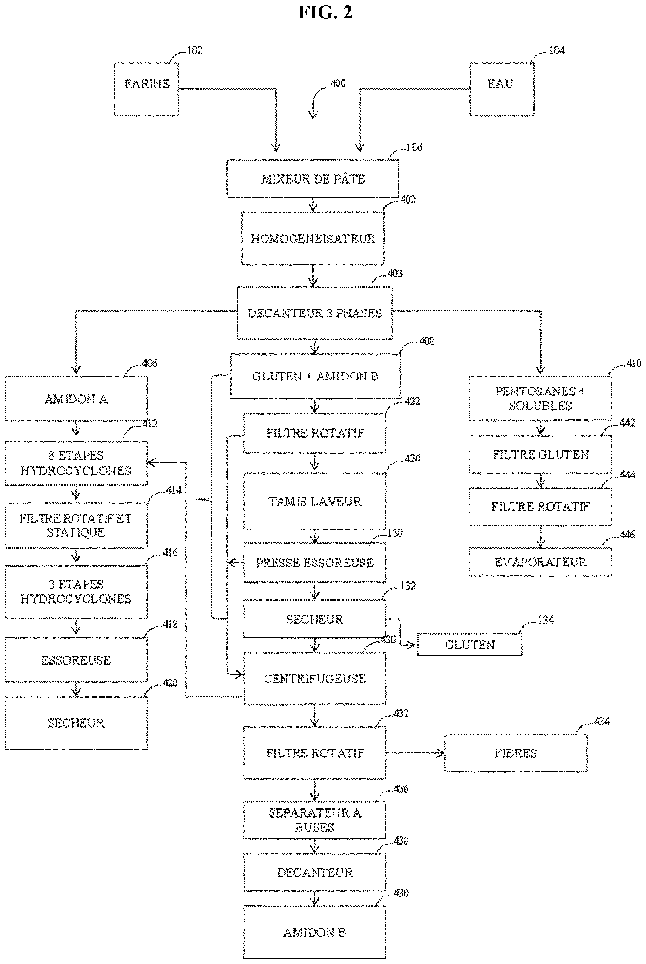

La **figure 2** est un schéma relatif à un procédé de type Tricanter® Process, tel que par exemple décrit dans le brevet US 8 309 152**.**

### EXEMPLES

### Mesure du taux de gluten d'un produit

La méthode ELISA R5 Mendez est la méthode de référence (*Codex Alimentarius*) pour tester le taux de gluten d'un produit.

### EXEMPLE 1

3 kg de saccharifiat d'amidon de blé à 32,1 % de MS (matière sèche) et pH = 3,7 ont été recueillis, analysés en teneur résiduelle de gluten (test ELISA sandwich R5) et rectifiés à pH = 6,0 à l'aide d'un ajout de NaOH diluée.

Puis ils ont été fractionnés en 6 parts de 0,5 kg chacune, traitées de la façon suivante :
- part n° 1 sans ajout de protéase ;
- part n° 2 additionnée de 5 mg de COROLASE® LAP (soit un ratio de 0,010 kg/T PB ; PB = Produit Brut) ;
- part n° 3 additionnée de 5 mg de FLAVORPRO™ 766MDP (soit un ratio de 0,010 kg/T PB) ;
- part n° 4 additionnée de 5 mg de FLAVORPRO™ 795MDP (soit un ratio de 0,010 kg/T PB) ;
- part n° 5 additionnée de 5 mg de FLAVOURZYME® 1000L (soit un ratio de 0,010 kg/T PB) ;
- part n° 6 additionnée de 5 mg de PROMOD™ 863MDP (soit un ratio de 0,010 kg/T PB).

Les 6 parts ont été placées dans un bain marie agité à 110 RPM et thermostaté à 55 °C pendant 24 h.

Ensuite, elles ont été analysées en teneur résiduelle de gluten (test ELISA sandwich R5), afin de déterminer l'impact de chaque enzyme testée.

Les résultats obtenus ont permis d'observer que sur un saccharifiat d'amidon de blé contenant 44 ppm de gluten, les protéases testées peuvent avoir les impacts suivants :

| | Gluten résiduel | **Taux de réduction du gluten** |
|---|---|---|
| Sans protéase | 44 ppm | **0 %** |
| COROLASE® LAP | 18 ppm | **60 %** |
| FLAVORPRO™ 766MDP | 4 ppm | **92 %** |
| FLAVORPRO™ 795MDP | 1 ppm | **99 %** |
| FLAVOURZYME® 1000L | 6 ppm | **87 %** |
| PROMOD™ 863MDP | 4 ppm | **91 %** |

### EXEMPLE 2 (non conforme à l'invention)

2,5 kg de saccharifiat d'amidon de blé à 33,1 % de MS (matière sèche) et pH = 3,9 ont été recueillis, analysés en teneur résiduelle de gluten (test ELISA sandwich R5) et rectifiés à pH = 5,2 à l'aide d'un ajout de NaOH diluée.

Puis ils ont été fractionnés en 5 parts de 0,5 kg chacune, traitées de la façon suivante :
- part n° 1 sans ajout de protéase ;
- part n° 3 additionnée de 1 mg de FLAVORPRO™ 766MDP (soit un ratio de 0,002 kg/T PB) ;
- part n° 4 additionnée de 1 mg de FLAVORPRO™ 795MDP (soit un ratio de 0,002 kg/T PB) ;
- part n° 5 additionnée de 1 mg de FLAVOURZYME® 1000L (soit un ratio de 0,002 kg/T PB) ;
- part n° 5 additionnée de 1 mg de PROMOD™ 863MDP (soit un ratio de 0,002 kg/T PB).

Les 5 parts ont été placées dans un bain marie agité à 110 RPM et thermostaté à 60 °C pendant 24 h.

Ensuite, elles ont été analysées en teneur résiduelle de gluten (test ELISA sandwich R5), afin de déterminer l'impact de chaque enzyme testée.

Les résultats obtenus ont permis d'observer que sur un saccharifiat d'amidon de blé contenant 144 ppm de gluten, les protéases testées peuvent avoir les impacts suivants :

| | Gluten résiduel | **Taux de réduction du gluten** |
|---|---|---|
| Sans protéase | 144 ppm | **0 %** |
| FLAVORPRO™ 766MDP | 28 ppm | **81 %** |
| FLAVORPRO™ 795MDP | 20 ppm | **86 %** |
| FLAVOURZYME® 1000L | 28 ppm | **81 %** |
| PROMOD™ 863MDP | 34 ppm | **72 %** |

### EXEMPLE 3

3,0 kg de saccharifiat d'amidon de blé à 32,6 % de MS (matière sèche) et pH = 4,6 ont été recueillis, analysés en teneur résiduelle de gluten (test ELISA sandwich R5) et rectifiés à pH = 5,2 à l'aide d'un ajout de NaOH diluée.

Puis ils ont été fractionnés en 6 parts de 0,5 kg chacune, traitées de la façon suivante :
- part n° 1 sans ajout de protéase ;
- part n° 3 additionnée de 1 mg de FLAVORPRO™ 766MDP (soit un ratio de 0,002 kg/T PB) ;
- part n° 4 additionnée de 1 mg de FLAVORPRO™ 795MDP (soit un ratio de 0,002 kg/T PB) ;
- part n° 5 additionnée de 1 mg de FLAVOURZYME® 1000L (soit un ratio de 0,002 kg/T PB) ;
- part n° 5 additionnée de 1 mg de PROMOD™ 863MDP (soit un ratio de 0,002 kg/T PB) ;
- part n° 6 additionnée de 1 mg de PROLINE SPECIFIC PROTEASE (soit un ratio de 0,002 kg/T PB).

Les 6 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre.

Ensuite, chaque hydrolysat a été analysé en teneur résiduelle de gluten (test ELISA sandwich R5), afin de déterminer l'impact de chaque enzyme testée.

Les résultats obtenus ont permis d'observer que sur un saccharifiat d'amidon de blé contenant 12 ppm de gluten, les protéases testées peuvent avoir les impacts suivants :

| | Gluten résiduel | **Taux de réduction du gluten** |
|---|---|---|
| Sans protéase | 8 ppm | **36 %** |
| FLAVORPRO™ 766MDP | 6 ppm | **54 %** |
| FLAVORPRO™ 795MDP | 8 ppm | **40 %** |
| FLAVOURZYME® 1000L | 6 ppm | **52 %** |
| PROMOD™ 863MDP | 5 ppm | **60 %** |
| PROLINE SPECIFIC PROTEASE | 1 ppm | **99 %** |

### EXEMPLE 4

3,5 kg de saccharifiat d'amidon de blé à 32,6 % de MS (matière sèche) et pH = 4,6 ont été recueillis, analysés en teneur résiduelle de gluten (test ELISA sandwich R5) et rectifiés à pH = 5,2 à l'aide d'un ajout de NaOH diluée, sauf pour une part (0,5 kg) qui a été rectifiée à pH 4,5 à l'aide d'ajout de H₂SO₄ dilué (pour répondre à la spécificité du procédé de saccharification d'un type de sirop de glucose particulier).

Puis ils ont été fractionnés en 7 parts de 0,5 kg chacune, traitées de la façon suivante :
- part n° 1 sans ajout de protéase ;
- part n° 3 additionnée de 1 mg de FLAVORPRO™ 766MDP (soit un ratio de 0,002 kg/T PB) ;
- part n° 4 additionnée de 1 mg de FLAVORPRO™ 795MDP (soit un ratio de 0,002 kg/T PB) ;
- part n° 5 additionnée de 1 mg de FLAVOURZYME® 1000L (soit un ratio de 0,002 kg/T PB) ;
- part n° 5 additionnée de 1 mg de PROMOD™ 863MDP (soit un ratio de 0,002 kg/T PB) ;
- part n° 6 additionnée de 1 mg de PROLINE SPECIFIC PROTEASE (soit un ratio de 0,002 kg/T PB) ;
- part n° 7 (à pH = 4,5) additionnée de 1 mg de PROLINE SPECIFIC PROTEASE (soit un ratio de 0,002 kg/T PB).

Les 7 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre.

Ensuite, chaque hydrolysat a été analysé en teneur résiduelle de gluten (test ELISA sandwich R5), afin de déterminer l'impact de chaque enzyme testée.

Les résultats obtenus ont permis d'observer que sur un saccharifiat d'amidon de blé contenant 148 ppm de gluten, les protéases testées peuvent avoir les impacts suivants :

| | Gluten résiduel | **Taux de réduction du gluten** |
|---|---|---|
| Sans protéase | 134 ppm | **9 %** |
| FLAVORPRO™ 766MDP | 18 ppm | **88 %** |
| FLAVORPRO™ 795MDP | 17 ppm | **88 %** |
| FLAVOURZYME® 1000L | 20 ppm | **87 %** |
| PROMOD™ 863MDP | 24 ppm | **84 %** |
| PROLINE SPECIFIC PROTEASE | 1 ppm | **99 %** |
| PROLINE SPECIFIC PROTEASE (à pH = 4,5) | 1 ppm | **99 %** |

### EXEMPLE 5

1,5 kg de saccharifiat d'amidon de blé à 30,3 % de MS (matière sèche) et pH = 4,2 ont été recueillis, analysés en teneur résiduelle de gluten (test ELISA sandwich R5) et rectifiés à pH = 5,2 à l'aide d'un ajout de NaOH diluée, sauf pour une part (0,5 kg) qui a été rectifiée à pH 4,5 (pour répondre à la spécificité du procédé de saccharification d'un type de sirop de glucose particulier).

Puis ils ont été fractionnés en 3 parts de 0,5 kg chacune, traitées de la façon suivante :
- part n° 1 sans ajout de protéase ;
- part n° 2 additionnée de 1 mg de PROLINE SPECIFIC PROTEASE (soit un ratio de 0,002 kg/T PB) ;
- part n° 3 (à pH = 4,5) additionnée de 1 mg de PROLINE SPECIFIC PROTEASE (soit un ratio de 0,002 kg/T PB).

Les 3 parts ont été placées dans un bain marie agité à 110 RPM et thermostaté à 60 °C pendant 24 h.

Ensuite, chaque hydrolysat a été analysé en teneur résiduelle de gluten (test ELISA sandwich R5), afin de déterminer l'impact de chaque enzyme testée.

Les résultats obtenus ont permis d'observer que sur un saccharifiat d'amidon de blé contenant 90 ppm de gluten, les protéases testées peuvent avoir les impacts suivants :

| | Gluten résiduel | **Taux de réduction du gluten** |
|---|---|---|
| Sans protéase | 90 ppm | **0%** |
| PROLINE SPECIFIC PROTEASE | 1 ppm | **99 %** |
| PROLINE SPECIFIC PROTEASE (à pH = 4,5) | 3 ppm | **97 %** |

### EXEMPLE 6

1,5 kg de saccharifiat d'amidon de blé à 34,4 % de MS (matière sèche) et pH = 4,3 ont été recueillis, analysés en teneur résiduelle de gluten (test ELISA sandwich R5) et rectifiés à pH = 5,2 à l'aide d'un ajout de NaOH diluée, sauf pour une part (0,5 kg) qui a été rectifiée à pH 4,5 (pour répondre à la spécificité du procédé de saccharification d'un type de sirop de glucose particulier).

Puis ils ont été fractionnés en 3 parts de 0,5 kg chacune, traitées de la façon suivante :
- part n° 1 sans ajout de protéase ;
- part n° 2 additionnée de 1 mg de PROLINE SPECIFIC PROTEASE (soit un ratio de 0,002 kg/T PB) ;
- part n° 3 (à pH = 4,5) additionnée de 1 mg de PROLINE SPECIFIC PROTEASE (soit un ratio de 0,002 kg/T PB).

Les 3 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre.

Ensuite, chaque hydrolysat a été analysé en teneur résiduelle de gluten (test ELISA sandwich R5), afin de déterminer l'impact de chaque enzyme testée.

Les résultats obtenus ont permis d'observer que sur un saccharifiat d'amidon de blé contenant 183 ppm de gluten, les protéases testées peuvent avoir les impacts suivants :

| | Gluten résiduel | **Taux de réduction du gluten** |
|---|---|---|
| Sans protéase | 170 ppm | **7%** |
| PROLINE SPECIFIC PROTEASE | 4 ppm | **98 %** |
| PROLINE SPECIFIC PROTEASE (à pH = 4,5) | 4 ppm | **98 %** |

### EXEMPLE 7

2,5 kg de saccharifiat d'amidon de blé à 33,4 % de MS (matière sèche) et pH = 3,3 ont été recueillis, analysés en teneur résiduelle de gluten (test ELISA sandwich R5) et rectifiés à pH = 5,2 à l'aide d'un ajout de NaOH diluée, sauf pour 2 parts (2 x 0,5 kg) qui ont été rectifiés à pH 4,5 (pour répondre à la spécificité du procédé de saccharification d'un type de sirop de glucose particulier).

Puis 3 fractions de 0,5 kg chacune ont été traitées de la façon suivante :
- part n° 1 sans ajout de protéase ;
- part n° 2 additionnée de 1 mg de PROLINE SPECIFIC PROTEASE (soit un ratio de 0,002 kg/T PB) ;
- part n° 3 (à pH = 4,5) additionnée de 1 mg de PROLINE SPECIFIC PROTEASE (soit un ratio de 0,002 kg/T PB).

Les 3 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre.

Ensuite, chaque hydrolysat a été analysé en teneur résiduelle de gluten (test ELISA sandwich R5), afin de déterminer l'impact de chaque enzyme testée.

Les résultats obtenus ont permis d'observer que sur un saccharifiat d'amidon de blé contenant 32 ppm de gluten, les protéases testées peuvent avoir les impacts suivants :

| | Gluten résiduel | **Taux de réduction du gluten** |
|---|---|---|
| Sans protéase | 29 ppm | **10 %** |
| PROLINE SPECIFIC PROTEASE | 8 ppm | **77 %** |
| PROLINE SPECIFIC PROTEASE (à pH = 4,5) | 8 ppm | **76 %** |

### EXEMPLE 8

4,5 kg de saccharifiat d'amidon de blé à 29,0 % de MS (matière sèche) et pH = 4,7 ont été recueillis, analysés en teneur résiduelle de gluten (test ELISA sandwich R5) et rectifiés pour 5 parts à pH = 5,2 à l'aide d'un ajout de NaOH diluée, et pour 4 parts à pH = 4,5 à l'aide d'un ajout de H₂SO₄ dilué (pour répondre à la spécificité du procédé de saccharification d'un type de sirop de glucose particulier).

Puis 7 fractions de 0,5 kg chacune ont traitées de la façon suivante :
- part n° 1 sans ajout de protéase ;
- part n° 2 additionnée de 1 mg de PROLINE SPECIFIC PROTEASE (soit un ratio de 0,002 kg/T PB) ;
- part n° 3 (à pH = 4,5) additionnée de 1 mg de PROLINE SPECIFIC PROTEASE (soit un ratio de 0,002 kg/T PB) ;
- part n° 4 additionnée de 1 mg de BREWERS CLAREX® (soit un ratio de 0,002 kg/T PB) ;
- part n° 5 (à pH = 4,5) additionnée de 1 mg de BREWERS CLAREX® (soit un ratio de 0,002 kg/T PB) ;
- part n° 6 additionnée de 10 mg de BREWERS CLAREX® (soit un ratio de 0,020 kg/T PB) ;
- part n° 7 (à pH = 4,5) additionnée de 10 mg de BREWERS CLAREX® (soit un ratio de 0,020 kg/T PB).

Les 7 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre.

Ensuite, chaque hydrolysat a été analysé en teneur résiduelle de gluten (test ELISA sandwich R5), afin de déterminer l'impact de chaque enzyme testée.

Les résultats obtenus ont permis d'observer que sur un saccharifiat d'amidon de blé contenant 20 ppm de gluten, les protéases testées peuvent avoir les impacts suivants :

| | Gluten résiduel | **Taux de réduction du gluten** |
|---|---|---|
| Sans protéase | 11 ppm | **44 %** |
| PROLINE SPECIFIC PROTEASE | 1 ppm | **95 %** |
| PROLINE SPECIFIC PROTEASE (à pH = 4,5) | 1 ppm | **95 %** |
| BREWERS CLAREX® (1 mg) | 1 ppm | **95 %** |
| BREWERS CLAREX® (1 mg / à pH = 4,5) | 1 ppm | **95 %** |
| BREWERS CLAREX® (10 mg) | 1 ppm | **95 %** |
| BREWERS CLAREX® (10 mg / à pH = 4,5) | 1 ppm | **95 %** |

### EXEMPLE 9 (non conforme à l'invention)

5,5 kg de saccharifiat d'amidon de blé à 32,9 % de MS (matière sèche) et pH = 4,4 ont été recueillis, analysés en teneur résiduelle de gluten (test ELISA sandwich R5) et rectifiés pour 5 parts à pH = 5,2 à l'aide d'un ajout de NaOH diluée, et pour 4 parts à pH = 4,5 (pour répondre à la spécificité du procédé de saccharification d'un type de sirop de glucose particulier).

Puis 9 fractions de 0,5 kg chacune ont été traitées de la façon suivante :
- part n° 1 (à pH = 5,2) sans ajout de protéase ;
- part n° 2 (à pH = 5,2) additionnée de 1 mg de FLAVORPRO™ 766MDP (soit un ratio de 0,002 kg/T PB) ;
- part n° 3 (à pH = 5,2) additionnée de 1 mg de FLAVORPRO™ 795MDP (soit un ratio de 0,002 kg/T PB) ;
- part n° 4 (à pH = 5,2) additionnée de 1 mg de PROMOD™ 863MDP (soit un ratio de 0,002 kg/T PB) ;
- part n° 5 (à pH = 5,2) additionnée de 1 mg de FLAVOURZYME® 1000L (soit un ratio de 0,002 kg/T PB) ;
- part n° 6 (à pH = 4,5) additionnée de 1,4 mg de FLAVORPRO™ 766MDP (soit un ratio de 0,003 kg/T PB) ;
- part n° 7 (à pH = 4,5) additionnée de 1,4 mg de FLAVORPRO™ 795MDP (soit un ratio de 0,003 kg/T PB) ;
- part n° 8 (à pH = 4,5) additionnée de 1,4 mg de PROMOD™ 863MDP (soit un ratio de 0,003 kg/T PB ;
- part n° 9 (à pH = 4,5) additionnée de 1,4 mg de FLAVOURZYME® 1000L (soit un ratio de 0,003 kg/T PB).

Les 9 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre.

Ensuite, chaque hydrolysat a été analysé en teneur résiduelle de gluten (test ELISA sandwich R5), afin de déterminer l'impact de chaque enzyme testée.

Les résultats obtenus ont permis d'observer que sur un saccharifiat d'amidon de blé contenant 193 ppm de gluten, les protéases testées peuvent avoir les impacts suivants :

| | Gluten résiduel | **Taux de réduction du gluten** |
|---|---|---|
| Sans protéase | 193 ppm | **0%** |
| FLAVORPRO™ 766MDP (1 mg / pH = 5,2) | 34 ppm | **83 %** |
| FLAVORPRO™ 795MDP (1 mg / pH = 5,2) | 22 ppm | **88 %** |
| PROMOD™ 863MDP (1 mg / pH = 5,2) | 29 ppm | **85 %** |
| FLAVOURZYME® 1000L (1 mg / pH = 5,2) | 25 ppm | **87 %** |
| FLAVORPRO™ 766MDP (1 mg / pH = 4,5) | 28 ppm | **85 %** |
| FLAVORPRO™ 795MDP (1 mg / pH = 4,5) | 26 ppm | **87 %** |
| PROMOD™ 863MDP (1 mg / pH = 4,5) | 45 ppm | **77 %** |
| FLAVOURZYME® 1000L (1 mg / pH = 4,5) | 42 ppm | **78 %** |

### EXEMPLE 10 (non conforme à l'invention)

2,5 kg de saccharifiat d'amidon de blé à 29,8 % de MS (matière sèche) et pH = 2,8 ont été recueillis, analysés en teneur résiduelle de gluten (test ELISA sandwich R5) et rectifiés pour 3 parts à pH = 5,2 à l'aide d'un ajout de NaOH diluée, et pour 2 parts à pH = 4,5 (pour répondre à la spécificité du procédé de saccharification d'un type de sirop de glucose particulier).

Puis 3 fractions de 0,5 kg chacune ont été traitées de la façon suivante :
- part n° 1 sans ajout de protéase ;
- part n° 2 additionnée de 1 mg de FLAVOURZYME® 1000L (soit un ratio de 0,002 kg/T PB) ;
- part n° 3 (à pH = 4,5) additionnée de 1,4 mg de FLAVOURZYME® 1000L (soit un ratio de 0,003 kg/T PB).

Les 3 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre.

Ensuite, chaque hydrolysat a été analysé en teneur résiduelle de gluten (test ELISA sandwich R5), afin de déterminer l'impact de chaque enzyme testée.

Les résultats obtenus ont permis d'observer que sur un saccharifiat d'amidon de blé contenant 38 ppm de gluten, les protéases testées peuvent avoir les impacts suivants :

| | Gluten résiduel | **Taux de réduction du gluten** |
|---|---|---|
| Sans protéase | 36 ppm | **4 %** |
| FLAVOURZYME® 1000L (1 mg) | 16 ppm | **57 %** |
| FLAVOURZYME® 1000L (1 mg / pH = 4,5) | 31 ppm | **18 %** |

### EXEMPLE 11

1,5 kg de saccharifiat d'amidon de blé à 32,1 % de MS (matière sèche) et pH = 4,2 ont été recueillis, analysés en teneur résiduelle de gluten (test ELISA sandwich R5) et rectifiés à pH = 5,2 à l'aide d'un ajout de NaOH diluée, sauf pour une part (0,5 kg) qui a été rectifiée à pH 4,5 (pour répondre à la spécificité du procédé de saccharification d'un type de sirop de glucose particulier).

Puis ils ont été fractionnés en 3 parts de 0,5 kg chacune, traitées de la façon suivante :
- part n° 1 (à pH = 5,2) sans ajout de protéase ;
- part n° 2 (à pH = 5,2) additionnée de 3 mg de BREWERS CLAREX® (soit un ratio de 0,006 kg/T PB) ;
- part n° 3 (à pH 4,5) additionnée de 3 mg de BREWERS CLAREX® (soit un ratio de 0,006 kg/T PB).

Les 3 parts ont été placées dans un bain marie agité à 110 RPM et thermostaté à 60 °C pendant 24 h.

Ensuite, elles ont été analysées en teneur résiduelle de gluten (test ELISA sandwich R5), afin de déterminer l'impact de chaque enzyme testée.

Les résultats obtenus ont permis d'observer que sur un saccharifiat d'amidon de blé contenant 135 ppm de gluten, les protéases testées peuvent avoir les impacts suivants :

| | Gluten résiduel | **Taux de réduction du gluten** |
|---|---|---|
| Sans protéase | 117 ppm | **13 %** |
| BREWERS CLAREX® | 4 ppm | **97 %** |
| BREWERS CLAREX® (à pH = 4,5) | 4 ppm | **97 %** |

### EXEMPLE 12

2 kg de saccharifiat d'amidon de blé à 32,5 % de MS (matière sèche) et pH = 3,7 ont été recueillis et analysés en teneur résiduelle de gluten (test ELISA sandwich R5).

Puis ils ont été fractionnés en 4 parts de 0,5 kg chacune, traitées de la façon suivante :
- Part n° 1 sans ajout de protéase ;
- Part n° 2 additionnée de 3 mg de BREWERS CLAREX® (soit un ratio de 0,006 kg/T PB) ;
- Part n° 3 additionnée de 3 mg de FLAVOURZYME® 1000L (soit un ratio de 0,006 kg/T PB) ;
- Part n° 4 additionnée de 3 mg d'ISOZYM CLEAR (soit un ratio de 0,006 kg/T PB).

Les 4 parts ont été placées dans un bain marie agité à 110 RPM et thermostaté à 60 °C pendant 24 h.

Ensuite, elles ont été analysées en teneur résiduelle de gluten (test ELISA sandwich R5), afin de déterminer l'impact de chaque enzyme testée.

Les résultats obtenus ont permis d'observer que sur un saccharifiat d'amidon de blé contenant 206 ppm de gluten, les protéases testées peuvent avoir les impacts suivants :

| | Gluten résiduel | **Taux de réduction du gluten** |
|---|---|---|
| Sans protéase | 206 ppm | **0 %** |
| BREWERS CLAREX® | 9 ppm | **96 %** |
| FLAVOURZYME® 1000L | 40 ppm | **80 %** |
| ISOZYM® CLEAR | 11 ppm | **95 %** |

### EXEMPLE 13

1,5 kg de saccharifiat d'amidon de blé à 32,5 % de MS (matière sèche) et pH = 5,5 ont été recueillis et analysés en teneur résiduelle de gluten (test ELISA sandwich R5).

Puis ils ont été fractionnés en 3 parts de 0,5 kg chacune, traitées de la façon suivante :
- Part n° 1 sans ajout de protéase
- Part n° 2 additionnée de 3 mg de ISOZYM® CLEAR (soit un ratio de 0,006 kg/T PB)
- Part n° 3 rectifiée à pH 4,5 et additionnée de 3 mg de ISOZYM®CLEAR (soit un ratio de 0,006 kg/T PB).

Les 3 parts ont été placées dans un bain marie agité à 110 RPM et thermostaté à 60 °C pendant 24 h.

Ensuite, elles ont été analysées en teneur résiduelle de gluten (test ELISA sandwich R5), afin de déterminer l'impact de chaque enzyme testée.

Les résultats obtenus ont permis d'observer que sur un saccharifiat d'amidon de blé contenant 124 ppm de gluten, les protéases testées peuvent avoir les impacts suivants :

| | Gluten résiduel | **Taux de réduction du gluten** |
|---|---|---|
| Sans protéase | 98 ppm | **21 %** |
| ISOZYM® CLEAR | 12 ppm | **91 %** |
| ISOZYM® CLEAR (à pH 4,5) | 12 ppm | **90 %** |

### EXEMPLE 14

Des lots de 130 tonnes de liquéfiat d'amidon de blé à environ 33 % de MS et pH = 5,2 ont été additionnés de 1,2 kg d'ISOZYM® CLEAR chacun (soit un ratio de 0,008 kg/T PB), d'autres lots n'ont pas reçu d'ISOZYM CLEAR (témoins).

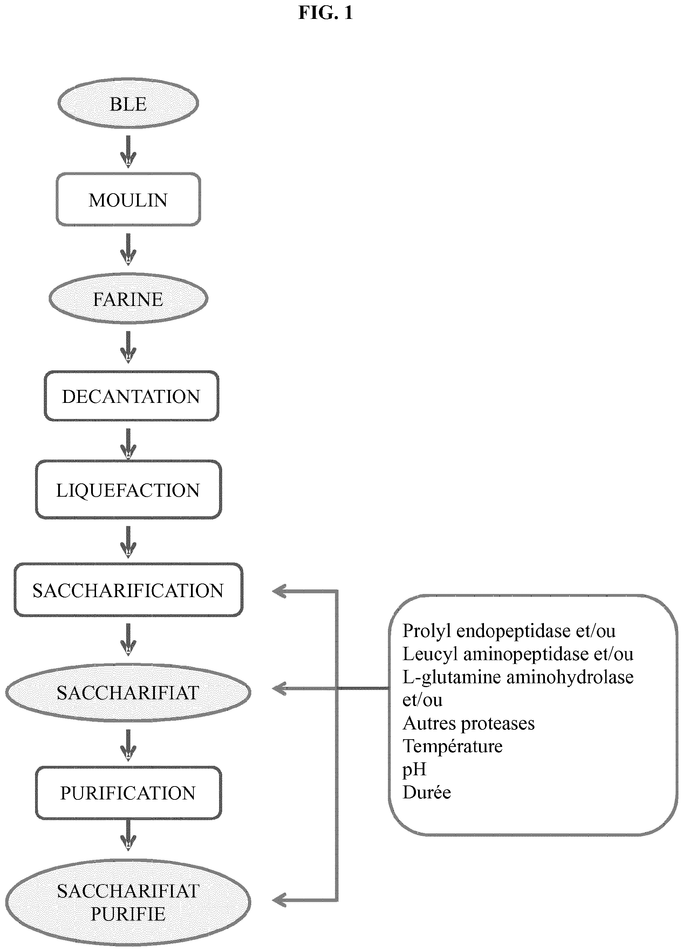

Puis, suivant le procédé illustré sur la figure n° 1, l'ensemble de ces liquéfiats a été hydrolysé en divers saccharifiats, pendant environ 24 h à 60 °C, avant de passer par plusieurs étapes successives de purification.

Les produits obtenus ont été analysés en teneur résiduelle de gluten (test ELISA sandwich R5), afin de déterminer l'impact de l'enzyme.

La protéase testée peut avoir l'impact suivant :

| Essais | 1 | 2 | 3 | 4 | 5 | 6 |
|---|---|---|---|---|---|---|
| Sortie liquéfaction | - | - | - | - | 121 ppm | 86 ppm |
| ISOZYM® CLEAR | non | non | non | non | oui | oui |
| Sortie saccharification | 45 ppm | 118 ppm | 73 ppm | 86 ppm | < 3 ppm | 5 ppm |
| Sortie étapes de purification | < 3 ppm | < 3 ppm | < 3 ppm | < 3 ppm | < 3 ppm | < 3 ppm |

### EXEMPLE 15

3 kg de saccharifiat d'amidon de blé à 33,8 % de MS et pH = 4,4 ont été recueillis, analysés en teneur résiduelle de gluten (test ELISA sandwich R5) et rectifiés à pH = 5,2 à l'aide d'un ajout de NaOH diluée. Ils ont été fractionnés en 6 parts de 0,5 kg chacune, additionnées de prolyl endoprotéase (ISOZYM® CLEAR), seule ou en combinaison avec une leucyl aminopeptidase (FLAVOURZYME® 500 L) :
- part n° 1 sans ajout de protéase ;
- part n° 2 additionnée de 3 mg d'ISOZYM® CLEAR (soit un ratio de 0,006 kg/T PB) ;
- part n° 3 additionnée de 3 mg de FLAVOURZYME® 500L (soit un ratio de 0,006 kg/T PB) ;
- part n° 4 additionnée de 1,5 mg d'ISOZYM® CLEAR (soit un ratio de 0,003 kg/T PB) et de 1,5 mg de FLAVOURZYME® 500L (soit un ratio de 0,003 kg/T PB) ;
- part n° 5 additionnée de 1,0 mg d'ISOZYM® CLEAR (soit un ratio de 0,002 kg/T PB) et de 2,0 mg de FLAVOURZYME® 500L (soit un ratio de 0,004 kg/T PB) ;
- part n° 6 additionnée de 2,0 mg d'ISOZYM® CLEAR (soit un ratio de 0,004 kg/T PB) et de 1,0 mg de FLAVOURZYME® 500L (soit un ratio de 0,002 kg/T PB).

Les 6 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre. Elles ont été analysées en teneur résiduelle de gluten (test ELISA sandwich R5), afin de déterminer l'impact de chaque enzyme ou de chaque mélange d'enzymes testés.

Les résultats obtenus ont permis d'observer que sur un saccharifiât d'amidon de blé contenant 111 ppm de gluten, les protéases testées peuvent avoir les impacts suivants :

| | Gluten résiduel | **Taux de réduction du gluten** |
|---|---|---|
| Sans protéase | 111 ppm | **0 %** |
| ISOZYM®CLEAR | 5 ppm | **95 %** |
| FLAVOURZYME® 500 L | 48 ppm | **57 %** |
| ISOZYM®CLEAR (1/2) | 4 ppm | **97 %** |
| FLAVOURZYME®500 L (1/2) | | |
| ISOZYM®CLEAR (1/3) | 6 ppm | **95 %** |
| FLAVOURZYME®500 L (2/3) | | |
| ISOZYM®CLEAR (2/3) | 5 ppm | **96 %** |
| FLAVOURZYME 500 L (1/3) | | |

### EXEMPLE 16

3 kg de saccharifiat d'amidon de blé à 31,3 % de MS et pH = 5,7 ont été recueillis, analysés en teneur résiduelle de gluten (test ELISA sandwich R5) et rectifiés à pH = 5,2 à l'aide d'un ajout de H2SO4 dilué. Puis ils ont été fractionnés en 6 parts de 0,5 kg chacune, additionnées de prolyl endoprotéase (ISOZYM® CLEAR), en combinaison ou non avec une L-glutamine aminohydrolase (SUMIZYME® GT) et plus précisément traités de la façon suivante :
- part n° 1 sans ajout de protéase ;
- part n° 2 additionnée de 3 mg d'ISOZYM® CLEAR (soit un ratio de 0,006 kg/T PB) ;
- part n° 3 additionnée de 3 mg de SUMIZYME® GT (soit un ratio de 0,006 kg/T PB) ;
- part n° 4 additionnée de 1,5 mg d'ISOZYM® CLEAR (soit un ratio de 0,003 kg/T PB) et de 1,5 mg de SUMIZYME® GT (soit un ratio de 0,003 kg/T PB) ;
- part n° 5 additionnée de 1,0 mg d'ISOZYM® CLEAR (soit un ratio de 0,002 kg/T PB) et de 2,0 mg de SUMIZYME® GT (soit un ratio de 0,004 kg/T PB) ;
- part n° 6 additionnée de 2,0 mg d'ISOZYM® CLEAR (soit un ratio de 0,004 kg/T PB) et de 1,0 mg de SUMIZYME® GT (soit un ratio de 0,002 kg/T PB).

Les 6 parts ont été placées dans un bain marie agité à 110 RPM et thermostaté à 60 °C pendant 24 h. Puis elles ont été placées dans un bain-marie thermostaté à 85 °C pendant 1 h, pour s'assurer d'une inactivation des protéases mises en œuvre. Ensuite, elles ont été analysées en teneur résiduelle de gluten (test ELISA sandwich R5), afin de déterminer l'impact de chaque enzyme ou de chaque mélange d'enzymes testés.

Les résultats obtenus ont permis d'observer que sur un saccharifiat d'amidon de blé contenant 141 ppm de gluten, les protéases testées peuvent avoir les impacts suivants :

| Enzyme | Gluten résiduel | **Taux de réduction du gluten** |
|---|---|---|
| Sans protéase | 141 ppm | **0 %** |
| ISOZYM®CLEAR | 10 ppm | **93 %** |
| SUMIZYME GT | 86 ppm | **39 %** |
| ISOZYM®CLEAR (1/2) | 7 ppm | **95 %** |
| SUMIZYME GT (1/2) | | |
| ISOZYM®CLEAR (1/3) | 11 ppm | **92 %** |
| SUMIZYME GT (2/3) | | |
| ISOZYM®CLEAR (2/3) | 7 ppm | **95 %** |
| SUMIZYME GT (1/3) | | |

## Revendications

1. Utilisation d'au moins une enzyme catalysant l'hydrolyse du gluten pour la mise en œuvre d'un procédé de préparation d'un sirop de glucose à teneur en protéines immunostimulantes comprises dans le gluten, notamment les gliadines et les gluténines, inférieure à 20 ppm, à partir d'amidon de céréale choisie dans le groupe du blé, de l'orge, du seigle et de l'épeautre, par mise en contact de ladite au moins une enzyme avec :
- un liquéfiat de lait d'amidon de céréale en phase d'hydrolyse pour obtenir un saccharifiat, ou
- un saccharifiat, éventuellement purifié, dudit amidon de céréale,
ledit liquéfiat ou ledit saccharifiat comprenant un taux de gluten compris de 20 à 400 ppm,
ladite enzyme étant une prolyl endopeptidase,
la quantité de ladite enzyme étant de 2 ppm, ou comprise de 3 à 20 ppm,
ladite teneur en protéines immunostimulantes étant déterminée par la méthode ELISA avec l'anticorps R5.

2. Utilisation selon la revendication 1, dans laquelle la prolyl endopeptidase est en présence d'une ou plusieurs leucyl-aminopeptidases ou L-glutamine aminohydrolases.

3. Utilisation selon la revendication 1 ou 2, d'au moins une enzyme choisie dans le groupe constitué de :
• une prolyl endopeptidase ayant une activité catalytique comprise de 0,005 à 0,80 « Unité de Protéase Proline » (PPU) par kg de saccharifiat,
• une prolyl endopeptidase ayant une activité catalytique comprise de 0,005 à 0,80 PPU par kg de saccharifiat et une leucyl aminopeptidase ayant une activité catalytique comprise de 0,2 à 20,0 « Unité Leucine Amino Peptidase » (LAPU) par kg de saccharifiat,
• une prolyl endopeptidase ayant une activité catalytique comprise de 0,005 à 0,80 PPU par kg de saccharifiat et une L-glutamine aminohydrolase ayant une activité comprise de 0,3 à 6,0 U par kg de saccharifiat,
• une prolyl endopeptidase ayant une activité catalytique comprise de 0,005 à 0,80 PPU par kg de saccharifiat, une leucyl aminopeptidase ayant une activité catalytique comprise de 0,2 à 20,0 LAPU par kg de saccharifiat et une L-glutamine aminohydrolase comprise de 0,3 à 6,0 U par kg de saccharifiat.

4. Procédé de préparation d'un sirop de glucose à teneur en protéines immunostimulantes comprises dans le gluten, notamment les gliadines et les gluténines, inférieure à 20 ppm, ledit procédé comprenant les étapes suivantes :
- une étape de mise en contact d'au moins une enzyme catalysant l'hydrolyse du gluten avec :
• un liquéfiat de lait d'amidon de céréale, choisie dans le groupe du blé, de l'orge, du seigle ou de l'épeautre, en phase d'hydrolyse pour obtenir un saccharifiat, ou
• un saccharifiat d'amidon de céréale, choisie dans le groupe du blé, de l'orge, du seigle ou de l'épeautre, éventuellement purifié, ledit liquéfiat ou ledit saccharifiat comprenant un taux de gluten comprise entre 20 et 400 ppm,
ladite enzyme étant une prolyl endopeptidase,
la quantité de ladite enzyme étant comprise entre 3 à 20 ppm, ou est de 2 ppm,
ladite teneur en protéines immunostimulantes étant déterminée par la méthode ELISA avec l'anticorps R5,
pour obtenir un saccharifiat d'amidon de céréale, éventuellement purifié, à teneur en protéines immunostimulantes comprises dans le gluten, notamment les gliadines et les gluténines, inférieure à 20 ppm;
- une étape de concentration du saccharifiat d'amidon de céréale, purifié, à teneur en protéines immunostimulantes comprises dans le gluten, notamment les gliadines et les gluténines, inférieure à 20 ppm, pour obtenir ledit sirop de glucose.

5. Procédé selon la revendication 4, comprenant
• les étapes suivantes :
- une étape de mise en contact de la prolyl endopeptidase
avec un saccharifiat d'amidon de céréale, pour obtenir un saccharifiat d'amidon de céréale, à teneur en protéines immunostimulantes comprises dans le gluten, notamment les gliadines et les gluténines, inférieure à 20 ppm;
- une ou plusieurs étapes de purification du saccharifiat d'amidon de céréale, à teneur en protéines immunostimulantes comprises dans le gluten, notamment les gliadines et les gluténines, inférieure à 20 ppm, pour obtenir un saccharifiat d'amidon de céréale, purifié, à teneur en protéines immunostimulantes comprises dans le gluten, notamment les gliadines et les gluténines, inférieure à 20 ppm ;
- une étape de concentration du saccharifiat d'amidon de céréale, purifié, à teneur en protéines immunostimulantes comprises dans le gluten, notamment les gliadines et les gluténines, inférieure à 20 ppm, pour obtenir ledit sirop de glucose,
ou
• les étapes suivantes :
- une étape de mise en contact de la prolyl endopeptidase
avec un saccharifiat d'amidon de céréale, purifié, pour obtenir un saccharifiat d'amidon de céréale, purifié, à teneur en protéines immunostimulantes comprises dans le gluten, notamment les gliadines et les gluténines, inférieure à 20 ppm;
- une étape de concentration du saccharifiat d'amidon de céréale, purifié, à teneur en protéines immunostimulantes comprises dans le gluten, notamment les gliadines et les gluténines, inférieure à 20 ppm, pour obtenir ledit sirop de glucose,
ou
• les étapes suivantes :
- une étape de mise en contact de la prolyl endopeptidase
avec un saccharifiat d'amidon de céréale, purifié, pour obtenir un saccharifiat d'amidon de céréale, purifié, à teneur en protéines immunostimulantes comprises dans le gluten, notamment les gliadines et les gluténines, inférieure à 20 ppm;
- une ou plusieurs étapes de purification du saccharifiat d'amidon de céréale, à teneur en protéines immunostimulantes comprises dans le gluten, notamment les gliadines et les gluténines, inférieure à 20 ppm, pour obtenir un saccharifiat d'amidon de céréale, purifié avant et après la mise en contact avec l'enzyme, à teneur en protéines immunostimulantes comprises dans le gluten, notamment les gliadines et les gluténines, inférieure à 20 ppm ;
- une étape de concentration du saccharifiat d'amidon de céréale, purifié avant et après la mise en contact avec l'enzyme, à teneur en protéines immunostimulantes comprises dans le gluten, notamment les gliadines et les gluténines, inférieure à 20 ppm, pour obtenir ledit sirop de glucose,
la ou les étapes de purification étant en particulier choisies parmi la filtration, la percolation sur charbons actifs et la déminéralisation.

6. Procédé selon l'une quelconque des revendications 4 à 5, dans lequel le saccharifiat d'amidon de céréale est obtenu par hydrolyse d'un liquéfiat de lait d'amidon de céréale, le liquéfiat de lait d'amidon de céréale étant en particulier obtenu par liquéfaction d'un lait d'amidon de céréale.

7. Procédé selon l'une quelconque des revendications 4 à 6, dans lequel :
• la teneur en protéines immunostimulantes comprises dans le gluten, notamment les gliadines et les gluténines du saccharifiat d'amidon de céréale, purifié, après la mise en contact avec l'enzyme, ou du sirop de glucose est inférieure à 19, 18, 17, 16, 15, 14, 13, 12, 11, 10, 9, 8, 7, 6, 5, 4, 3, 2, 1 ou est égale à 0 ppm,
ou
• le taux de réduction des protéines immunostimulantes comprises dans le gluten, notamment les gliadines et les gluténines dans le saccharifiat avant et après la mise en contact avec ladite enzyme est compris de 50 à 100%, en particulier de 55, 60, 65, 70, 75, 80, 85, 90, 95 ou 99, à 100%.

8. Procédé selon l'une quelconque des revendications 4 à 7, dans lequel la céréale est non germée et est choisie parmi le blé, l'épeautre, l'orge et le seigle, ladite céréale étant en particulier le blé.

9. Procédé selon l'une quelconque des revendications 4 à 8, dans lequel
la prolyl endopeptidase, choisie notamment parmi les prolyl endopeptidases ayant une activité catalytique comprise de 0,005 à 0,80 PPU par kg de saccharifiat, est associée à une ou plusieurs L-glutamine aminohydrolases, telle que la L-glutamine aminohydrolase *d'Aspergillus niger* ayant une activité comprise de 0,3 à 6,0 U par kg de saccharifiat, ou à une ou plusieurs leucyl aminopeptidases, notamment les leucyl aminopeptidases ayant une activité catalytique comprise de 0,2 à 20,0 LAPU par kg de saccharifiat.

10. Procédé selon l'une quelconque des revendications 4 à 9, dans lequel la mise en contact se fait avec une quantité de prolyl endopeptidase de 2 mg, ou comprise de 3 à 20 mg par kg de saccharifiat.

11. Procédé selon l'une quelconque des revendications 4 à 10, dans lequel ladite au moins une enzyme est :
• une prolyl endopeptidase ayant une activité catalytique comprise de 0,005 à 0,80 PPU par kg de saccharifiat,
• une prolyl endopeptidase ayant une activité catalytique comprise de 0,005 à 0,80 PPU par kg de saccharifiat et une leucyl aminopeptidase ayant une activité catalytique comprise de 0,2 à 20,0 LAPU par kg de saccharifiat,
• une prolyl endopeptidase ayant une activité catalytique comprise de 0,005 à 0,80 PPU par kg de saccharifiat et une L-glutamine aminohydrolase ayant une activité comprise de 0,3 à 6,0 U par kg de saccharifiat,
• une prolyl endopeptidase ayant une activité catalytique comprise de 0,005 à 0,80 PPU par kg de saccharifiat, une leucyl aminopeptidase ayant une activité catalytique comprise de 0,2 à 20,0 LAPU par kg de saccharifiat et une L-glutamine aminohydrolase ayant une activité comprise de 0,3 à 6,0 U par kg de saccharifiat.

12. Procédé selon l'une quelconque des revendications 4 à 11, dans lequel :
• ledit sirop de glucose a une teneur en équivalent dextrose supérieure ou égale à 20,0 % m/m, la teneur en équivalent dextrose étant en particulier comprise de 20 à 99,9%, plus particulièrement de 25 à 99,9%, encore plus particulièrement de 31 à 99,9%, ou
• la matière sèche du sirop de glucose est supérieure à 70%, ladite matière sèche étant en particulier comprise de 70 à 100%, plus particulièrement de 70 à 90%, encore plus particulièrement de 70 à 86%.

13. Sirop de glucose à partir d'amidon de céréale choisie dans le groupe du blé, de l'orge, du seigle et de l'épeautre, à teneur en protéines immunostimulantes comprises dans le gluten, notamment les gliadines et les gluténines inférieure à 20 ppm comprenant 2 ppm, ou de 3 à 20 ppm d'au moins une prolyl endopeptidase catalysant l'hydrolyse du gluten, ladite prolyl endopeptidase étant éventuellement inactivée, la teneur en protéines immunostimulantes comprises dans le gluten, notamment les gliadines et les gluténines du sirop de glucose étant en particulier inférieure à 19, 18, 17, 16, 15, 14, 13, 12, 11, 10, 9, 8, 7, 6, 5, 4, 3, 2 ou 1 ppm,
ladite teneur en protéines immunostimulantes étant déterminée par la méthode ELISA avec l'anticorps R5.

14. Sirop de glucose selon la revendication 13, dans lequel :
• ledit sirop de glucose a une teneur en équivalent dextrose supérieure ou égale à 20,0 % m/m, la teneur en équivalent dextrose étant en particulier comprise de 20 à 99,9%, plus particulièrement de 25 à 99,9%, encore plus particulièrement de 31 à 99,9%, ou
• la matière sèche du sirop de glucose est supérieure à 70%, ladite matière sèche étant en particulier comprise de 70 à 100%, plus particulièrement de 70 à 90%, encore plus particulièrement de 70 à 86%.

15. Saccharifiat ou perméat d'amidon de céréale à teneur en protéines immunostimulantes comprises dans le gluten, notamment les gliadines et les gluténines inférieure à 20 ppm comprenant 2, ou de 3 à 20 mg par kgde saccharifiat d'une prolyl endopeptidase catalysant l'hydrolyse du gluten, ladite prolyl endopeptidase étant éventuellement inactivée,
ladite céréale étant choisie dans le groupe du blé, de l'orge, du seigle et de l'épeautre, ladite teneur en protéines immunostimulantes étant déterminée par la méthode ELISA avec l'anticorps R5.

## Patentansprüche

1. Verwendung von mindestens einem Enzym, das die Hydrolyse von Gluten katalysiert, zur Durchführung eines Verfahrens zur Herstellung von Glukosesirup mit einem Gehalt an immunostimulierenden Proteinen, die in Gluten enthalten sind, insbesondere Gliadinen und Gluteninen, von weniger als 20 ppm, aus Getreidestärke, ausgewählt aus der Gruppe von Weizen, Gerste, Roggen und Dinkel, durch Inberührungbringen des genannten mindestens einen Enzyms mit:
- einem Liquefiat von Getreidestärkemilch in der Hydrolysephase, um ein Saccharifiat zu erhalten, oder
- einem gegebenenfalls gereinigten Saccharifiat der genannten Getreidestärke,
wobei das genannte Liquefiat oder das genannte Saccharifiat einen Gehalt an Gluten von 20 bis 400 ppm umfasst,
wobei das genannte Enzym eine Prolylendopeptidase ist, wobei die Menge des genannten Enzyms 2 ppm oder von 3 bis 20 ppm beträgt,
wobei der genannte Gehalt an immunostimulierenden Proteinen durch das ELISA-Verfahren mit dem Antikörper R5 bestimmt wird.

2. Verwendung nach Anspruch 1, wobei die Prolylendopeptidase in Gegenwart einer oder mehrerer Leucylaminopeptidasen oder L-Glutaminaminohydrolasen ist.

3. Verwendung nach Anspruch 1 oder 2, mindestens eines Enzyms, ausgewählt aus der Gruppe bestehend aus:
• einer Prolylendopeptidase mit einer katalytischen Aktivität von 0,005 bis 0,80 "Prolinprotease-Einheiten" (PPU) pro kg Saccharifiat,
• einer Prolylendopeptidase mit einer katalytischen Aktivität von 0,005 bis 0,80 PPU pro kg Saccharifiat und einer Leucylaminopeptidase mit einer katalytischen Aktivität von 0,2 bis 20,0 "Leucinaminopeptidase-Einheiten" (LAPU) pro kg Saccharifiat,
• einer Prolylendopeptidase mit einer katalytischen Aktivität von 0,005 bis 0,80 PPU pro kg Saccharifiat und einer L-Glutaminaminohydrolase mit einer Aktivität von 0,3 bis 6,0 U pro kg Saccharifiat,
• einer Prolylendopeptidase mit einer katalytischen Aktivität von 0,005 bis 0,80 PPU pro kg Saccharifiat, einer Leucylaminopeptidase mit einer katalytischen Aktivität von 0,2 bis 20,0 LAPU pro kg Saccharifiat und einer L-Glutaminaminohydrolase von 0,3 bis 6,0 U pro kg Saccharifiat.

4. Verfahren zur Herstellung von Glukosesirup mit einem Gehalt an immunostimulierenden Proteinen, die in Gluten enthalten sind, insbesondere Gliadinen und Gluteninen, von weniger als 20 ppm, wobei das genannte Verfahren die folgenden Schritte umfasst:
- einen Schritt des Inberührungbringens mindestens eines Enzyms, das die Hydrolyse von Gluten katalysiert, mit:
• einem Liquefiat von Getreidestärkemilch, ausgewählt aus der Gruppe von Weizen, Gerste, Roggen oder Dinkel, in der Hydrolysephase, um ein Saccharifiat zu erhalten, oder
• einem gegebenenfalls gereinigten Getreidestärkesaccharifiat, ausgewählt aus der Gruppe von Weizen, Gerste, Roggen oder Dinkel,
wobei das genannte Liquefiat oder das genannte Saccharifiat einen Gehalt an Gluten zwischen 20 und 400 ppm umfasst,
wobei das genannte Enzym eine Prolylendopeptidase ist, wobei die Menge des genannten Enzyms von 3 bis 20 ppm beträgt oder 2 ppm beträgt,
wobei der Gehalt an immunostimulierenden Proteinen durch das ELISA-Verfahren mit dem Antikörper R5 bestimmt wird,
um ein gegebenenfalls gereinigtes Getreidestärkesaccharifiat mit einem Gehalt an immunostimulierenden Proteinen, die in Gluten enthalten sind, insbesondere Gliadinen und Gluteninen, von weniger als 20 ppm zu erhalten;
- einen Schritt des Konzentrierens des gereinigten Getreidestärkesaccharifiats mit einem Gehalt an immunostimulierenden Proteinen, die in Gluten enthalten sind, insbesondere Gliadinen und Gluteninen, von weniger als 20 ppm, um den genannten Glukosesirup zu erhalten.

5. Verfahren nach Anspruch 4, umfassend:
• die folgenden Schritte:
- einen Schritt des Inberührungbringens von Prolylendopeptidase mit einem Getreidestärkesaccharifiat, um ein Getreidestärkesaccharifiat mit einem Gehalt an immunostimulierenden Proteinen, die in Gluten enthalten sind, insbesondere Gliadinen und Gluteninen, von weniger als 20 ppm zu erhalten;
- einen oder mehrere Schritte des Reinigens des Getreidestärkesaccharifiats mit einem Gehalt an immunostimulierenden Proteinen, die in Gluten enthalten sind, insbesondere Gliadinen und Gluteninen, von weniger als 20 ppm, um ein gereinigtes Getreidestärkesaccharifiat mit einem Gehalt an immunostimulierenden Proteinen, die in Gluten enthalten sind, insbesondere Gliadinen und Gluteninen, von weniger als 20 ppm zu erhalten;
- einen Schritt des Konzentrierens des gereinigten Getreidestärkesaccharifiats mit einem Gehalt an immunostimulierenden Proteinen, die in Gluten enthalten sind, insbesondere Gliadinen und Gluteninen, von weniger als 20 ppm, um den genannten Glukosesirup zu erhalten;
oder
• die folgenden Schritte:
- einen Schritt des Inberührungbringens von Prolylendopeptidase mit einem gereinigten Getreidestärkesaccharifiat, um ein gereinigtes Getreidestärkesaccharifiat mit einem Gehalt an immunostimulierenden Proteinen, die in Gluten enthalten sind, insbesondere Gliadinen und Gluteninen, von weniger als 20 ppm zu erhalten;
- einen Schritt des Konzentrierens des gereinigten Getreidestärkesaccharifiats mit einem Gehalt an immunostimulierenden Proteinen, die in Gluten enthalten sind, insbesondere Gliadinen und Gluteninen, von weniger als 20 ppm, um den genannten Glukosesirup zu erhalten;
oder
• die folgenden Schritte:
- einen Schritt des Inberührungbringens von Prolylendopeptidase mit einem gereinigten Getreidestärkesaccharifiat, um ein gereinigtes Getreidestärkesaccharifiat mit einem Gehalt an immunostimulierenden Proteinen, die in Gluten enthalten sind, insbesondere Gliadinen und Gluteninen, von weniger als 20 ppm zu erhalten;
- einen oder mehrere Schritte des Reinigens des Getreidestärkesaccharifiats mit einem Gehalt an immunostimulierenden Proteinen, die in Gluten enthalten sind, insbesondere Gliadinen und Gluteninen, von weniger als 20 ppm, um ein Getreidestärkesaccharifiat, gereinigt vor und nach dem Inberührungbringen mit dem Enzym, mit einem Gehalt an immunostimulierenden Proteinen, die in Gluten enthalten sind, insbesondere Gliadinen und Gluteninen, von weniger als 20 ppm zu erhalten;
- einen Schritt des Konzentrierens des Getreidestärkesaccharifiats, gereinigt vor und nach dem Inberührungbringen mit dem Enzym, mit einem Gehalt an immunostimulierenden Proteinen, die in Gluten enthalten sind, insbesondere Gliadinen und Gluteninen, von weniger als 20 ppm, um den genannten Glukosesirup zu erhalten;
wobei der oder die Reinigungsschritte insbesondere ausgewählt werden aus Filtration, Perkolation auf Aktivkohle und Entmineralisierung.

6. Verfahren nach einem der Ansprüche 4 bis 5, wobei das Getreidestärkesaccharifiat durch Hydrolyse eines Liquefiats von Getreidestärkemilch erhalten wird, wobei das Liquefiat von Getreidestärkemilch insbesondere durch Verflüssigen einer Getreidestärkemilch erhalten wird.

7. Verfahren nach einem der Ansprüche 4 bis 6, wobei:
• der Gehalt an immunostimulierenden Proteinen, die in Gluten enthalten sind, insbesondere Gliadinen und Gluteninen, des Getreidestärkesaccharifiats, gereinigt, nach dem Inberührungbringen mit dem Enzym, oder des Glukosesirups kleiner ist als 19, 18, 17, 16, 15, 14, 13, 12, 11, 10, 9, 8, 7, 6, 5, 4, 3, 2, 1 oder gleich 0 ppm ist,
oder
• der Reduktionsgrad von immunostimulierenden Proteinen, die in Gluten enthalten sind, insbesondere Gliadinen und Gluteninen, in dem Saccharifiat, vor und nach dem Inberührungbringen mit dem genannten Enzym, von 50 bis 100 % beträgt, insbesondere von 55, 60, 65, 70, 75, 80, 85, 90, 95 oder 99 bis 100 %.

8. Verfahren nach einem der Ansprüche 4 bis 7, wobei das Getreide nicht gekeimt ist und ausgewählt wird aus Weizen, Dinkel, Gerste und Roggen, wobei das genannte Getreide insbesondere Weizen ist.

9. Verfahren nach einem der Ansprüche 4 bis 8, wobei die Prolylendopeptidase, insbesondere ausgewählt aus Prolylendopeptidasen mit einer katalytischen Aktivität von 0,005 bis 0,80 PPU pro kg Saccharifiat, assoziiert wird mit einer oder mehreren L-Glutaminaminohydrolasen, wie der L-Glutaminaminohydrolase von *Aspergillus niger* mit einer Aktivität von 0,3 bis 6,0 U pro kg Saccharifiat, oder mit einer oder mehreren Leucylaminopeptidasen, insbesondere den Leucylaminopeptidasen mit einer katalytischen Aktivität von 0,2 bis 20,0 LAPU pro kg Saccharifiat.

10. Verfahren nach einem der Ansprüche 4 bis 9, wobei das Inberührungbringen mit einer Menge an Prolylendopeptidase von 2 mg oder von 3 bis 20 mg pro kg Saccharifiat erfolgt.

11. Verfahren nach einem der Ansprüche 4 bis 10, wobei das genannte mindestens eine Enzym ist:
• eine Prolylendopeptidase mit einer katalytischen Aktivität von 0,005 bis 0,80 PPU pro kg Saccharifiat,
• eine Prolylendopeptidase mit einer katalytischen Aktivität von 0,005 bis 0,80 PPU pro kg Saccharifiat und eine Leucylaminopeptidase mit einer katalytischen Aktivität von 0,2 bis 20,0 LAPU pro kg Saccharifiat,
• eine Prolylendopeptidase mit einer katalytischen Aktivität von 0,005 bis 0,80 PPU pro kg Saccharifiat und eine L-Glutaminaminohydrolase mit einer Aktivität von 0,3 bis 6,0 U pro kg Saccharifiat,
• eine Prolylendopeptidase mit einer katalytischen Aktivität von 0,005 bis 0,80 PPU pro kg Saccharifiat, eine Leucylaminopeptidase mit einer katalytischen Aktivität von 0,2 bis 20,0 LAPU pro kg Saccharifiat und eine L-Glutaminaminohydrolase mit einer Aktivität von 0,3 bis 6,0 U pro kg Saccharifiat.

12. Verfahren nach einem der Ansprüche 4 bis 11, wobei:
• der genannte Glukosesirup einen Dextrose-Äquivalent-Gehalt größer oder gleich 20,0 % m/m aufweist, wobei der Dextrose-Äquivalent-Gehalt insbesondere von 20 bis 99,9 %, bevorzugter von 25 bis 99,9 %, noch mehr bevorzugt von 31 bis 99,9 % beträgt,
oder
• das Trockenmaterial des Glukosesirups mehr als 70 % beträgt, wobei das genannte Trockenmaterial insbesondere von 70 bis 100 %, bevorzugter von 70 bis 90 %, noch mehr bevorzugt von 70 bis 86 % beträgt.

13. Glukosesirup aus Getreidestärke, ausgewählt aus der Gruppe von Weizen, Gerste, Roggen und Dinkel, mit einem Gehalt an immunostimulierenden Proteinen, die in Gluten enthalten sind, insbesondere Gliadinen und Gluteninen, von weniger als 20 ppm, umfassend 2 ppm oder von 3 bis 20 ppm mindestens einer Prolylpeptidase, welche die Hydrolyse von Gluten katalysiert, wobei die genannte Prolylpeptidase gegebenenfalls inaktiviert ist, wobei der Gehalt an immunostimulierenden Proteinen, die in Gluten enthalten sind, insbesondere Gliadinen und Gluteninen, des Glukosesirups insbesondere kleiner ist als 19, 18, 17, 16, 15, 14, 13, 12, 11, 10, 9, 8, 7, 6, 5, 4, 3, 2 oder 1 ppm,
wobei der genannte Gehalt an immunostimulierenden Proteinen durch das ELISA-Verfahren mit dem Antikörper R5 bestimmt wird.

14. Glukosesirup nach Anspruch 13, wobei:
• der genannte Glukosesirup einen Dextrose-Äquivalent-Gehalt größer oder gleich 20,0 % m/m aufweist, wobei der Dextrose-Äquivalent-Gehalt insbesondere von 20 bis 99,9 %, bevorzugter von 25 bis 99,9 %, noch mehr bevorzugt von 31 bis 99,9 % beträgt,
oder
• das Trockenmaterial des Glukosesirups mehr als 70 % beträgt, wobei das genannte Trockenmaterial insbesondere von 70 bis 100 %, bevorzugter von 70 bis 90 %, noch mehr bevorzugt von 70 bis 86 % beträgt.

15. Getreidestärkesaccharifiat oder -permeat mit einem Gehalt an immunostimulierenden Proteinen, die in Gluten enthalten sind, insbesondere Gliadinen und Gluteninen, von weniger als 20 ppm, umfassend 2 oder von 3 bis 20 mg pro kg Saccharifiat einer Propylendopeptidase, welche die Hydrolyse von Gluten katalysiert, wobei die genannte Propylendopeptidase gegebenenfalls inaktiviert ist,
wobei das genannte Getreide aus der Gruppe von Weizen, Gerste, Roggen und Dinkel ausgewählt ist,
wobei der genannte Gehalt an immunostimulierenden Proteinen durch das ELISA-Verfahren mit dem Antikörper R5 bestimmt wird.

## Claims

1. Use of at least one enzyme catalyzing the hydrolysis of gluten for the implementation of a process of preparation of a glucose syrup having an immunostimulatory protein content comprised in the gluten, in particular gliadins and glutenins, lower than 20 ppm, from cereal starch chosen from the group of wheat, barley, rye and spelt, by contacting said at least one enzyme with:
- a liquefact cereal starch milk in the hydrolysis phase to obtain a saccharifact, or
- a saccharifact, optionally purified, of said cereal starch,
said liquefact or said saccharifact comprising a gluten content comprised from 20 to 400 ppm,
said enzyme being a prolyl endopeptidase,
the quantity of said enzyme being 2 ppm, or comprised from 3 to 20 ppm,
said immunostimulatory protein content being determined by the ELISA method with the R5 antibody.

2. Use according to claim 1, in which the prolyl endopeptidase is in the presence of one or more leucyl-aminopeptidases or L-glutamine-aminohydrolases.

3. Use according to claim 1 or 2, of at least one enzyme chosen from the group consisting of:
• a prolyl endopeptidase having a catalytic activity comprised from 0.005 to 0.80 "Proline Protease Unit" (PPU) per kg of saccharifact,
• a prolyl endopeptidase having a catalytic activity comprised from 0.005 to 0.80 PPU per kg of saccharifact and a leucyl aminopeptidase having a catalytic activity comprised from 0.2 to 20.0 "Leucine Amino Peptidase Unit" (LAPU) per kg of saccharifact,
• a prolyl endopeptidase having a catalytic activity comprised from 0.005 to 0.80 PPU per kg of saccharifact and an L-glutamine aminohydrolase having a catalytic activity comprised from 0.3 to 6.0 U per kg of saccharifact,
• a prolyl endopeptidase having a catalytic activity comprised from 0.005 to 0.80 PPU per kg of saccharifact, a leucyl aminopeptidase having a catalytic activity comprised from 0.2 to 20.0 LAPU per kg of saccharifact and an L-glutamine aminohydrolase having a catalytic activity comprised from 0.3 to 6.0 U per kg of saccharifact.

4. Process for preparing a glucose syrup having an immunostimulatory protein content comprised in the gluten, in particular gliadins and glutenins, lower than 20 ppm, said process comprising the following steps:
- a step of contacting at least one enzyme catalyzing the hydrolysis of gluten with:
• a liquefact of cereal starch milk, chosen from the group of wheat, barley, rye and spelt, in the hydrolysis phase to obtain a saccharifact, or
• a saccharifact of cereal starch, chosen from the group of wheat, barley, rye and spelt, optionally purified,
said liquefact or said saccharifact comprising a gluten content comprised from 20 to 400 ppm,
said enzyme being a prolyl endopeptidase,
the quantity of said enzyme being comprised from 3 to 20 ppm, or is 2 ppm,
said immunostimulatory protein content being determined by the ELISA method with the R5 antibody,
to obtain a saccharifact of cereal starch, optionally purified, having an immunostimulatory protein content comprised in the gluten, in particular gliadins and glutenins, lower than 20 ppm;
- a step of concentration of the saccharifact of cereal starch, optionally purified, having an immunostimulatory protein content comprised in the gluten, in particular gliadins and glutenins, lower than 20 ppm, to obtain said glucose syrup.

5. Process according to claim 4, comprising
• the following steps:
- a step of contacting the prolyl endopeptidase with a saccharifact of cereal starch, to obtain a saccharifact of cereal starch, having an immunostimulatory protein content comprised in the gluten, in particular gliadins and glutenins, lower than 20 ppm;
- one or more purification steps of the saccharifact of cereal starch, having an immunostimulatory protein content comprised in the gluten, in particular gliadins and glutenins, lower than 20 ppm, to obtain a saccharifact of cereal starch, purified, having an immunostimulatory protein content comprised in the gluten, in particular gliadins and glutenins, lower than 20 ppm;
- a step of concentrating the saccharifact of cereal starch, having an immunostimulatory protein content comprised in the gluten, in particular gliadins and glutenins, lower than 20 ppm, to obtain said glucose syrup;
or
• the following steps :
- a step of contacting the prolyl endopeptidase with a saccharifact of cereal starch, purified, to obtain a saccharifact of cereal starch, purified, having an immunostimulatory protein content comprised in the gluten, in particular gliadins and glutenins, lower than 20 ppm;
- a step of concentrating the saccharifact of cereal starch, purified, having an immunostimulatory protein content comprised in the gluten, in particular gliadins and glutenins, lower than 20 ppm, to obtain said glucose syrup;
or
• the following steps:
- a step of contacting the prolyl endopeptidase with a saccharifact of cereal starch, purified, to obtain a saccharifact of cereal starch, having an immunostimulatory protein content comprised in the gluten, in particular gliadins and glutenins, lower than 20 ppm;
- one or more purification steps of the saccharifact of cereal starch, having an immunostimulatory protein content comprised in the gluten, in particular gliadins and glutenins, lower than 20 ppm, to obtain a saccharifact of cereal starch, purified before and after the contacting step with the enzyme, having an immunostimulatory protein content comprised in the gluten, in particular gliadins and glutenins, lower than 20 ppm;
- a step of concentrating the saccharifact of cereal starch, purified before and after the contacting step with the enzyme, having an immunostimulatory protein content comprised in the gluten, in particular gliadins and glutenins, lower than 20 ppm, to obtain said glucose syrup,
the purification step or steps being in particular chosen from filtration, percolation active charcoal and demineralization.

6. Process according to one of claims 4 to 5, in which the saccharifact of cereal starch is obtained by hydrolysis of a liquefact of cereal starch milk, the liquefact of cereal starch milk being in particular obtained by liquefaction of a cereal starch milk.

7. Process according to one of claims 4 to 6, in which:
• the immunostimulatory protein content comprised in the gluten, in particular gliadins and glutenins of the cereal starch saccharifact, purified, after the contacting step with the enzyme, or of the glucose syrup, is lower than 19, 18, 17, 16, 15, 14, 13, 12, 11, 10, 9, 8, 7, 6, 5, 4, 3, 2, 1, or is equal to 0 ppm,
or
• the reduction rate of immunostimulatory proteins comprised in the gluten, in particular gliadins and glutenins of the saccharifact, before and after the contacting step with said enzyme is comprised from 50 to 100%, in particular from 55, 60, 65, 70, 75, 80, 85, 90 or 99, to 100%.

8. Process according to one of claims 4 to 7, in which the cereal is not germinated and is chosen from wheat, barley, rye and spelt, said cereal being in particular wheat.

9. Process according to one of claims 4 to 8, in which the prolyl endopeptidase, in particular chosen from the prolyl endopeptidases having a catalytic activity comprised from 0.005 to 0.80 PPU per kg of saccharifact, is associated to one or more L-glutamine aminohydrolases, such as L-glutamine hydrolase of *Aspergillus niger* having an activity comprised from 0.3 to 6.0 U per kg of saccharifact, or to one or more leucyl aminopeptidases, in particular the leucyl aminopeptidases having a catalytic activity comprised from 0.2 to 20.0 LAPU per kg of saccharifact.

10. Process according to one of claims 4 to 9, in which the contacting step is done with a quantity of prolyl endopeptidase of 2 mg, or comprised from 3 to 20 mg per kg of saccharifact.

11. Process according to one of claims 4 to 10, in which said at least one enzyme is:
• a prolyl endopeptidase having a catalytic activity comprised from 0.005 to 0.80 PPU per kg of saccharifact,
• a prolyl endopeptidase having a catalytic activity comprised from 0.005 to 0.80 PPU per kg of saccharifact and a leucyl aminopeptidase having a catalytic activity comprised from 0.2 to 20.0 LAPU per kg of saccharifact,
• a prolyl endopeptidase having a catalytic activity comprised from 0.005 to 0.80 PPU per kg of saccharifact and an L-glutamine aminohydrolase having a catalytic activity comprised from 0.3 to 6.0 U per kg of saccharifact,
• a prolyl endopeptidase having a catalytic activity comprised from 0.005 to 0.80 PPU per kg of saccharifact, a leucyl aminopeptidase having a catalytic activity comprised from 0.2 to 20.0 LAPU per kg of saccharifact and an L-glutamine aminohydrolase having a catalytic activity comprised from 0.3 to 6.0 U per kg of saccharifact.

12. Process according to one of claims 4 to 11, in which:
• said glucose syrup has a dextrose equivalent content higher than, or equal to 20,0 w/w%, the dextrose equivalent content being in particular comprised from 20 to 99.9%, more in particular from 25 to 99.9%, even more in particular from 31 to 99.9%,
or
• the dry matter of the glycose syrup is higher than 70%, said dry matter being in particular comprised from 70 to 100%, more in particular from 70 to 90%, even more in particular from 70 to 86%.

13. Glucose syrup from cereal starch chosen from the group of wheat, barley, rye and spelt, having an immunostimulatory protein content comprised in the gluten, in particular gliadins and glutenins, lower than 20 ppm; comprising 2 ppm, or from 3 to 20 ppm of at least one prolyl endopeptidase catalyzing the hydrolysis of gluten, said prolyl endopeptidase being optionally deactivated, the immunostimulatory protein content comprised in the gluten, in particular gliadins and glutenins of the glucose syrup, being in particular lower than 19, 18, 17, 16, 15, 14, 13, 12, 11, 10, 9, 8, 7, 6, 5, 4, 3, 2 or 1 ppm,
said immunostimulatory protein content being determined by the ELISA method with the R5 antibody.

14. Glucose syrup according to claim 13, in which:
• said glucose syrup has a dextrose equivalent content higher than, or equal to 20,0 w/w%, the dextrose equivalent content being in particular comprised from 20 to 99.9%, more in particular from 25 to 99.9%, even more in particular from 31 to 99.9%,
or
• the dry matter of the glucose syrup is higher than 70%, said dry matter being in particular comprised from 70 to 100%, more in particular from 70 to 90%, even more in particular from 70 to 86%.

15. Saccharifact or permeate of cereal starch having an immunostimulatory protein content comprised in the gluten, in particular gliadins and glutenins, lower than 20 ppm; comprising 2 ppm, or from 3 to 20 mg per kg de saccharifact of a prolyl endopeptidase catalyzing the hydrolysis of gluten, said prolyl endopeptidase being optionally deactivated,
said cereal being chosen from the group of wheat, barley, rye and spelt,
said immunostimulatory protein content being determined by the ELISA method with the R5 antibody.
